# EUROPEAN PATENT APPLICATION

(11) **EP 4 707 673 A1**
(43) Date of publication of application: **11.03.2026**
(21) Application number: 24818969.8
(22) Date of filing: 14.02.2024
(51) Int. Cl.: F22B 3/04, B01D 53/14, B01D 53/62, B01D 53/78, F22B 33/18, F22B 1/18

(54) **HEAT RECOVERY UTILIZATION SYSTEM**

(30) Priority: 09.06.2023 JP 2023095392
(71) Applicant: Mitsubishi Heavy Industries, Ltd., Tokyo 100-8332 (JP)
(72) Inventor: UECHI, Hideyuki, Tokyo 100-8332 (JP); TSUJIUCHI, Tatsuya, Tokyo 100-8332 (JP); YOSHIKAWA, Masashi, Tokyo 100-8332 (JP); HIRATA, Takuya, Tokyo 100-8332 (JP); PHAM, Khanhson, Kobe-shi, Hyogo 652-8585 (JP); KIMURA, Shintaro, Tokyo 100-8332 (JP)
(74) Representative: Studio Torta S.p.A.
(86) International application number: PCT/JP2024/005069
(87) International publication number: WO 2024/252730

(57) **Abstract**

This heat recovery utilization system comprises: a circulation line through which a first medium circulates; a first heat exchanger for heating the first medium in a liquid state flowing through the circulation line by means of heat exchange with a heat source medium; a high-pressure flash tank which is provided to the circulation line and through which the first medium in the liquid state heated by the first heat exchanger is guided; at least one low-pressure flash tank which is provided to the circulation line and through which the first medium in the liquid state is guided from the high-pressure flash tank; a steam supply line for guiding the steam of the first medium generated in the high-pressure flash tank to a heat utilization facility; a steam merging line for merging the steam of the first medium generated in the at least one low-pressure flash tank into the steam of the first medium from the high-pressure flash tank flowing through the steam supply line; and at least one low-pressure stage compressor provided to the steam merging line and raising the pressure of the steam of the first medium from the at least one low-pressure flash tank.

## Description

### Technical Field

The present disclosure relates to a heat recovery utilization system.

The present application claims the right of priority based on Japanese Patent Application No. 2023-095392 filed with the Japan Patent Office on June 9, 2023, the content of which is incorporated herein by reference.

### Background Art

A technology has been proposed in which flash steam is generated from a liquid heated by a heat source medium (exhaust gas or the like) to efficiently recover waste heat.

PTL 1 describes that liquid (water) heated by heat exchange with exhaust gas from a gas turbine is sequentially guided to a plurality of flash tanks, and flash steam respectively having different pressures is sequentially generated and used in the plurality of flash tanks.

### Citation List

### Patent Literature

[PTL 1] Japanese Unexamined Patent Application Publication No. 2021-85608

### Summary of Invention

### Technical Problem

Among the plurality of flash tanks to which the liquid heated by the heat exchange with the heat source medium is guided, a temperature and a pressure of flash steam obtained in a flash tank in a rear stage are lower than a temperature and a pressure of flash steam obtained in a flash tank in a front stage. Therefore, an amount of flash steam that can be used at a high temperature or a high pressure is limited. Therefore, it is desirable to obtain a larger amount of high-temperature and high-pressure steam while heat is efficiently recovered.

In view of the above-described circumstances, an object of at least one embodiment of the present invention is to provide a heat recovery utilization system that can use a larger amount of high-temperature and high-pressure steam while heat is efficiently recovered.

### Solution to Problem

A heat recovery utilization system according to at least one embodiment of the present invention includes:
a circulation line through which a first medium circulates;
a first heat exchanger for heating the first medium in a liquid state flowing through the circulation line through heat exchange with a heat source medium;
a high-pressure flash tank provided in the circulation line and to which the first medium in the liquid state heated by the first heat exchanger is guided;
at least one low-pressure flash tank provided in the circulation line and to which the first medium in the liquid state is guided from the high-pressure flash tank;
a steam supply line for guiding steam of the first medium generated in the high-pressure flash tank to a heat utilization facility;
a steam merging line for merging steam of the first medium generated in the at least one low-pressure flash tank with the steam of the first medium from the high-pressure flash tank flowing through the steam supply line; and
at least one low-pressure stage compressor for pressurizing the steam of the first medium from the at least one low-pressure flash tank, the at least one low-pressure stage compressor being provided in the steam merging line.

### Advantageous Effects of Invention

According to at least one embodiment of the present invention, there is provided a heat recovery utilization system that can use a larger amount of high-temperature and high-pressure steam while heat is efficiently recovered.

### Brief Description of Drawings

FIG. 1 is a schematic configuration diagram of a heat recovery utilization system according to one embodiment.
FIG. 2 is a schematic configuration diagram of a heat recovery utilization system according to one embodiment.
FIG. 3 is a schematic configuration diagram of a heat recovery utilization system according to one embodiment.
FIG. 4 is a schematic configuration diagram of a heat recovery utilization system according to one embodiment.
FIG. 5 is a schematic configuration diagram of a heat recovery utilization system according to one embodiment.
FIG. 6 is a schematic configuration diagram of a heat recovery utilization system according to one embodiment.
FIG. 7 is a schematic configuration diagram of a heat recovery utilization system according to one embodiment.
FIG. 8 is a schematic configuration diagram of a heat recovery utilization system according to one embodiment.
FIG. 9 is a schematic configuration diagram of a heat recovery utilization system according to one embodiment.
FIG. 10 is a schematic configuration diagram of a heat recovery utilization system according to one embodiment.
FIG. 11 is a schematic configuration diagram of a heat recovery utilization system according to one embodiment.
FIG. 12 is a schematic configuration diagram of a heat recovery utilization system according to one embodiment.
FIG. 13 is a schematic configuration diagram of a heat recovery utilization system according to one embodiment.
FIG. 14 is a schematic configuration diagram of a heat recovery utilization system according to one embodiment.
FIG. 15 is a schematic configuration diagram of a heat recovery utilization system according to one embodiment.
FIG. 16 is a graph showing an example of temperatures and amounts of heat exchange of a heat source medium and a first medium in a first heat exchanger.
FIG. 17 is a graph showing an example of temperatures and amounts of heat exchange of a medium to be heated and a first medium in a heat utilization facility.
FIG. 18 is a schematic diagram of a general heat recovery utilization system.
FIG. 19 is a graph showing an example of a relationship between a temperature and an entropy of a first heat medium and a heat source medium in a general heat recovery utilization system.
FIG. 20 is a graph showing an example of a relationship between a temperature and an entropy of a first heat medium and a heat source medium in a heat recovery utilization system 1 shown in FIG. 1.
FIG. 21 is a graph showing an example of a relationship between a temperature and an entropy of a first heat medium and a heat source medium in the heat recovery utilization system 1 shown in FIG. 6.

### Description of Embodiments

Hereinafter, some embodiments of the present invention will be described with reference to the accompanying drawings. Dimensions, materials, shapes, relative arrangements, and the like of components described as embodiments or shown in the drawings are not intended to limit the scope of the present invention, but are merely explanatory examples.

### (Configuration of Heat Recovery Utilization System)

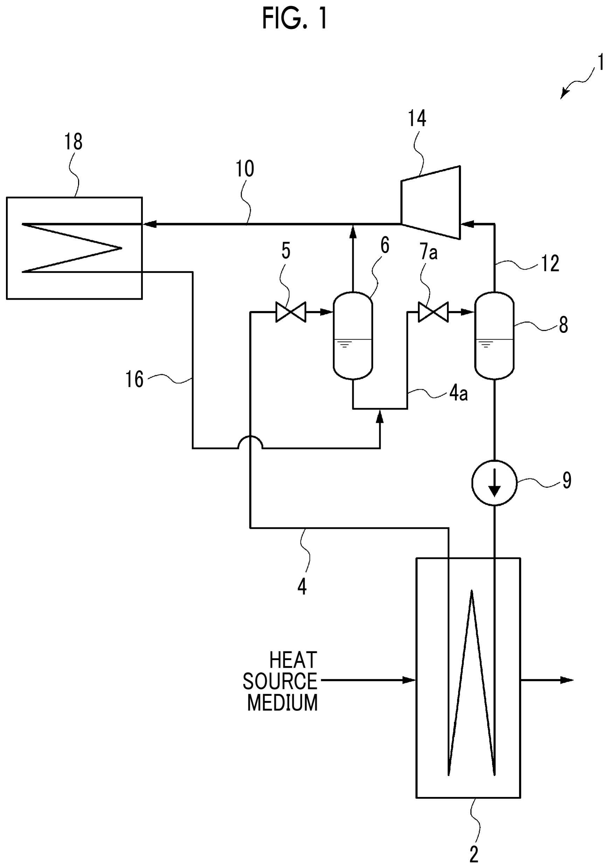

Each of FIGS. 1 to 15 is a schematic configuration diagram of a heat recovery utilization system according to one embodiment. As shown in FIGS. 1 to 15, the heat recovery utilization system 1 according to some embodiments includes a circulation line 4 through which a first medium (for example, water) circulates, a first heat exchanger 2 for heating the first medium flowing through the circulation line 4, and a high-pressure flash tank 6 and at least one low-pressure flash tank 8 that are respectively provided in the circulation line 4.

The first heat exchanger 2 is configured to heat the first medium in a liquid state flowing through the circulation line 4 through heat exchange with the heat source medium. A relatively high-temperature fluid can be used as the heat source medium. As the heat source medium, for example, combustion exhaust gas from a combustion device, a reaction gas after a chemical reaction at a high temperature, a gas condensed in a condenser in a distillation facility, hot spring water, hot water heated by solar heat, or the like can be used.

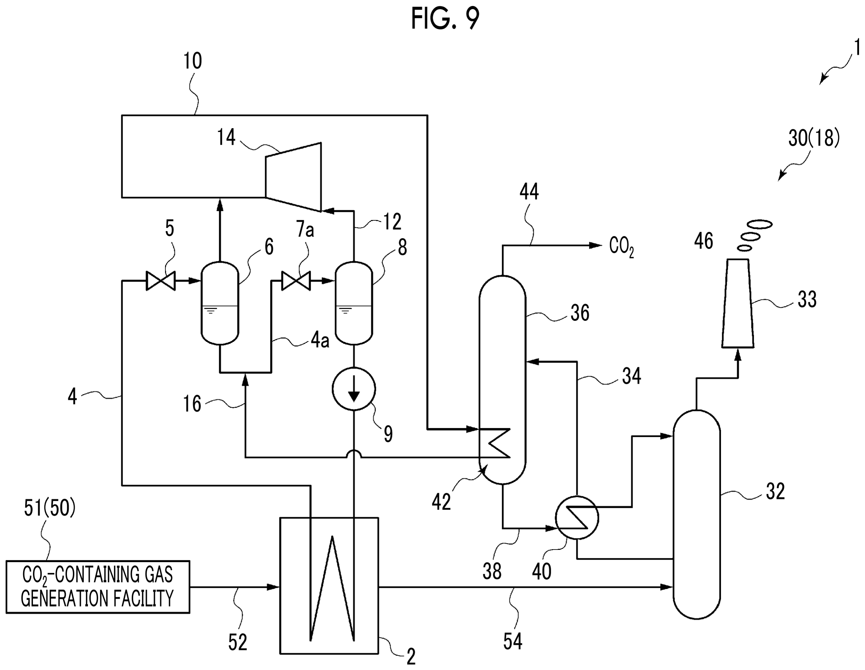

For example, as shown in FIGS. 9 to 13, the exhaust gas from an exhaust gas generation facility 50 may be supplied to the first heat exchanger 2 as a heat source medium. The exhaust gas generation facility 50 may include, for example, a gas turbine, a boiler, a gas engine, a fuel cell (solid oxide fuel cell (SOFC) or the like), a blast furnace, a thermal treatment furnace that combusts fuel, a ceramic kiln, or a waste incinerator.

The high-pressure flash tank 6 is provided downstream of the first heat exchanger 2 in the circulation line 4. The first medium in the liquid state heated by the first heat exchanger is guided to the high-pressure flash tank 6 via the circulation line 4. A pressure-reducing valve 5 for pressure-reducing the first medium guided to the high-pressure flash tank 6 may be provided in the circulation line 4 on an inlet side of the high-pressure flash tank 6.

The high-pressure flash tank 6 is configured to generate steam (flash steam; saturated steam) by flashing (that is, pressure-reducing and boiling) the first medium. The flash steam of the first medium generated in the high-pressure flash tank 6 is supplied to a heat utilization facility 18 via a steam supply line 10. The steam supply line 10 may be connected to a top portion of the high-pressure flash tank 6.
within the high-pressure flash tank 6, the flash steam of the first medium is generated, and a liquid of the first medium at a saturation temperature T_{sat_H} at a pressure within the high-pressure flash tank 6 is generated. The liquid of the first medium is stored in a bottom portion of the high-pressure flash tank 6 and is guided to the low-pressure flash tank 8 (to be described later) via the circulation line 4.

The low-pressure flash tank 8 is provided downstream of the high-pressure flash tank 6 in the circulation line 4. The high-pressure flash tank 6 and the low-pressure flash tank 8 are connected to each other via a connection line 4a that configures the circulation line 4. The liquid of the first medium within the high-pressure flash tank 6 is extracted from the bottom portion of the high-pressure flash tank 6 via the connection line 4a and is guided to the low-pressure flash tank 8. The connection line 4a may be provided with a pressure-reducing valve 7a for pressure-reducing the first medium guided to the low-pressure flash tank 8.

The low-pressure flash tank 8 is configured to flash the first medium (that is, to pressure-reduce and boil) to generate steam (flash steam; saturated steam). In the low-pressure flash tank 8, flash steam having a lower pressure than the flash steam generated in the high-pressure flash tank 6 is generated. The flash steam of the first medium generated in the low-pressure flash tank 8 is merged with the steam of the first medium (steam from the high-pressure flash tank 6) flowing through the steam supply line 10 via a merging line 12. One end of the merging line 12 may be connected to a top portion of the low-pressure flash tank 8, and the other end may be connected to the steam supply line 10.

In the low-pressure flash tank 8, the flash steam of the first medium is generated, and the liquid of the first medium at the saturation temperature T_{sat_L} at a pressure in the low-pressure flash tank 8 is generated. The liquid of the first medium is stored in the bottom portion of the low-pressure flash tank 8 and is fed to the first heat exchanger 2 via the circulation line 4. The circulation line 4 may be provided with a pump 9 for pumping the first medium in the liquid state from the low-pressure flash tank 8 toward the first heat exchanger 2.

The above-described merging line 12 is provided with a low-pressure stage compressor 14 for pressurizing the steam of the first medium from the low-pressure flash tank 8. That is, the flash steam of the first medium generated in the low-pressure flash tank 8 is pressurized by the low-pressure stage compressor 14, and then flows into the steam supply line 10 after being heated. The flash steam of the first medium from the low-pressure flash tank 8 flowing into the steam supply line 10 is supplied to the heat utilization facility 18 together with the steam of the first medium from the high-pressure flash tank 6. The low-pressure stage compressor 14 may be configured to pressurize the steam of the first medium from the low-pressure flash tank 8 to the same pressure as the steam of the first medium from the high-pressure flash tank 6.

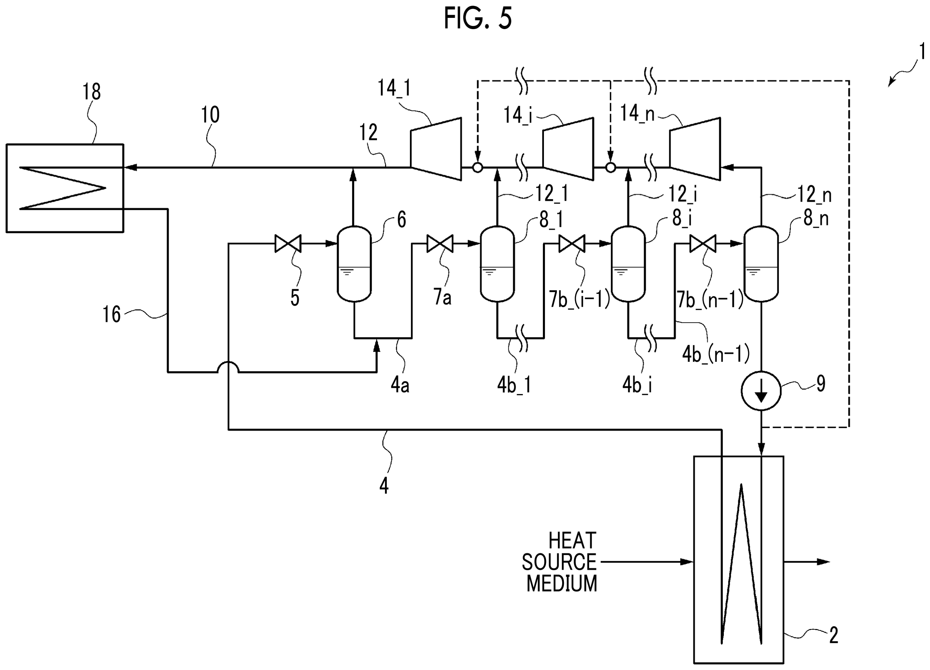

The heat recovery utilization system 1 may include one or a plurality of the above-described low-pressure flash tanks 8. In the exemplary embodiments shown in FIGS. 1 to 4 and FIGS. 9 to 13, the heat recovery utilization system 1 includes one low-pressure flash tank 8. In the exemplary embodiments shown in FIGS. 5 to 8, the heat recovery utilization system 1 includes a plurality of low-pressure flash tanks 8_1, ..., 8_i, ..., 8_n (where n is an integer of 2 or more; hereinafter, each of the low-pressure flash tanks 8_1 to 8_n is collectively referred to as the low-pressure flash tank 8).

As shown in FIGS. 5 to 8, the plurality of low-pressure flash tanks 8_1 to 8_n are provided in this order from upstream of the circulation line 4. That is, the plurality of low-pressure flash tanks 8 include the low-pressure flash tank 8_1 located most upstream of the circulation line 4 and the low-pressure flash tank 8_n located most downstream of the circulation line 4.

Among the plurality of low-pressure flash tanks 8_1 to 8_n, the low-pressure flash tank 8_i and the low-pressure flash tank 8_(i+1) are connected to each other via a connection line 4b_i that configures the circulation line 4. The connection line 4b_i may be provided with a pressure-reducing valve 7b_i (hereinafter, each of pressure-reducing valves 7b_1 to 7b_(n-1) is collectively referred to as a pressure-reducing valve 7b) for pressure-reducing the first medium guided to the low-pressure flash tank 8.

Each of the low-pressure flash tanks 8 is configured to flash the first medium (that is, to pressure-reduce and boil) to generate steam (flash steam; saturated steam). In the low-pressure flash tank 8 (for example, the low-pressure flash tank 8_i) of the downstream stage, flash steam having a lower pressure than the flash steam generated in the low-pressure flash tank 8 (for example, low-pressure flash tank 8_(i-1)) of the upstream stage is generated. The flash steam of the first medium generated in each of the low-pressure flash tanks 8 is merged with the steam of the first medium (steam from the high-pressure flash tank 6) flowing through the steam supply line 10 via the merging line 12. Here, the merging line 12 may include branch lines 12_1 to 12_n connected to the tops of the low-pressure flash tanks 8_1 to 8_n. In the exemplary embodiments shown in FIGS. 5 to 8, the flash steam of the first medium generated in the low-pressure flash tanks 8_1 to 8_n is guided to the merging line 12 via the branch lines 12_1 to 12_n, respectively.

In the low-pressure flash tanks 8_1 to 8_n, the flash steam of the first medium is generated, and the liquid of the first medium at the saturation temperatures T_{sat_}L1 to T_{sat_}Ln (T_{sat_}L1 > T_{sat_}Li > T_{sat_}Ln) at a pressure in the low-pressure flash tanks 8_1 to 8_n is generated. The liquid of the first medium is stored in the bottom portions of the low-pressure flash tanks 8_1 to 8_n. The liquid of the first medium in the low-pressure flash tank 8_i is extracted from the bottom portion of the low-pressure flash tank 8_i via the connection line 4b_i and is guided to the low-pressure flash tank 8_(i+1). In addition, the liquid of the first medium in the low-pressure flash tank 8_n located most downstream of the circulation line 4 is fed to the first heat exchanger 2 via the circulation line 4.

As shown in FIGS. 5 to 8, the merging line 12 is provided with low-pressure stage compressors 14_1 to 14_n (hereinafter, collectively referred to as low-pressure stage compressors 14) for pressurizing the steam of the first medium from the low-pressure flash tanks 8_1 to 8_n. That is, the flash steam of the first medium generated in the low-pressure flash tanks 8_1 to 8_n is pressurized by the low-pressure stage compressors 14_1 to 14_n, and then the temperature is raised, and thereafter, the flash steam flows into the steam supply line 10. The flash steam of the first medium from the low-pressure flash tanks 8_1 to 8_n flowing into the steam supply line 10 is supplied to the heat utilization facility 18 together with the steam of the first medium from the high-pressure flash tank 6.

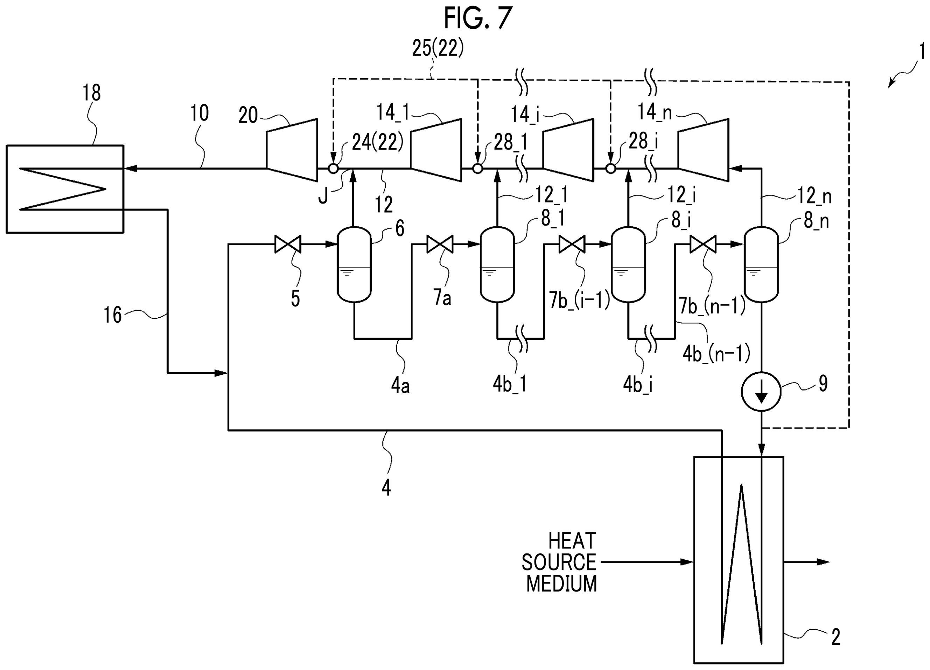

As shown in FIG. 5 or 7, a plurality of low-pressure stage compressors 14_1 to 14_n may be provided in series with respect to the merging line 12. In this case, a pressure ratio of each of the plurality of low-pressure stage compressors 14_1 to 14_n can be reduced. Each of low-pressure stage compressors 14_i may be configured to pressurize the steam of the first medium from the low-pressure flash tank 8_i to the same pressure as the steam of the first medium from the low-pressure flash tank 8_(i-1) of the upstream stage.

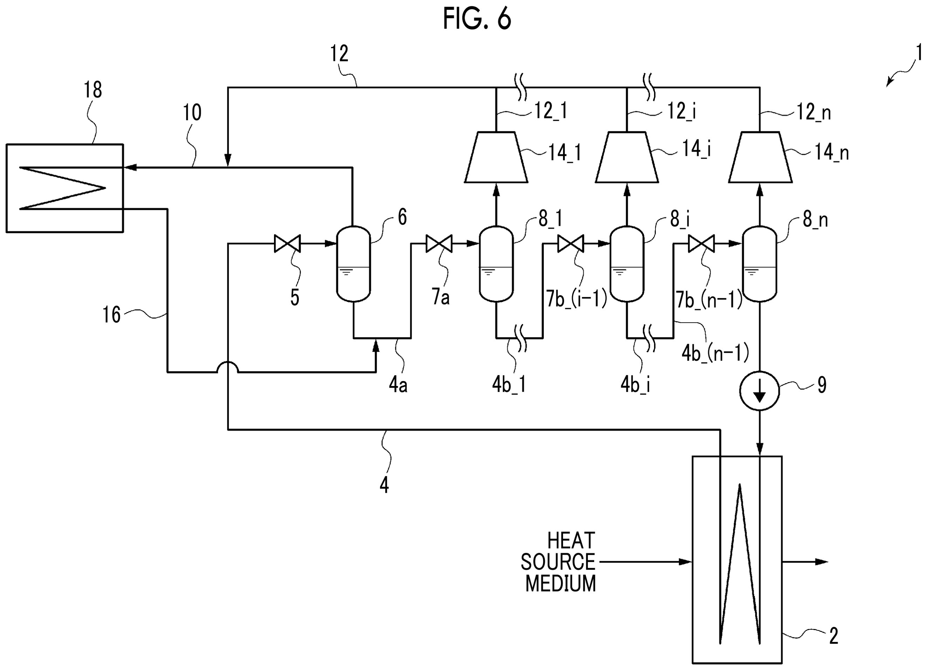

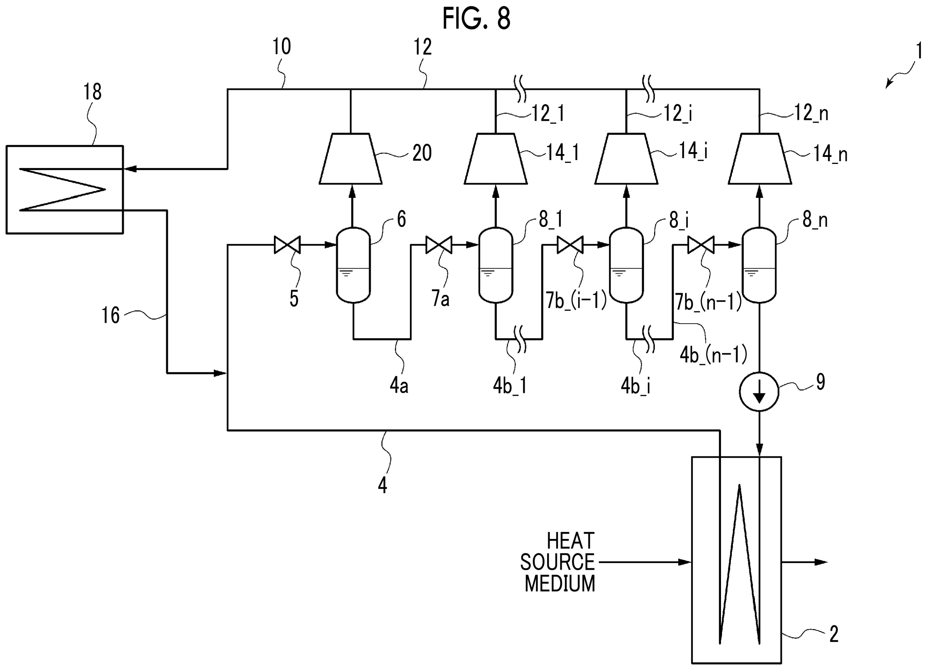

Alternatively, as shown in FIG. 6 or 8, the plurality of low-pressure stage compressors 14_1 to 14_n may be provided parallel to the merging line 12. The plurality of low-pressure stage compressors 14_1 to 14_n may be configured to pressurize the steam of the first medium from the low-pressure flash tanks 8_1 to 8_n to the same pressure as the steam of the first medium from the high-pressure flash tank 6.

The heat utilization facility 18 is configured to receive the steam of the first medium from the steam supply line 10 and to use the steam as a heat source. The heat utilization facility 18 may be configured to heat the medium to be heated through heat exchange with the first medium.

The heat utilization facility 18 may include, for example, a steam generator, a reactor, an evaporator, and a distillation column for a chemical substance (ammonia, alcohol (methanol, ethanol, and the like), hydrocarbon (propane, butane, pentane, hexane, cyclohexane, heptane, octane, nonane, decane, and the like)), an evaporator and a distillation column for petroleum, a regeneration facility for an absorber of a carbon dioxide (CO₂) recovery facility, and a food heating device (boiling, steaming, heat sterilization, and the like) in a food factory. In the exemplary embodiments shown in FIGS. 9, 10, 14, and 15, the heat utilization facility 18 includes a carbon dioxide recovery facility 30.

The first medium used as a heat source in the heat utilization facility 18 may be returned to the circulation line 4 via a return line 16.

With the heat recovery utilization system 1 according to the above-described embodiment, the first medium heated by heat exchange with the heat source medium in the first heat exchanger 2 is sequentially flashed in the high-pressure flash tank 6 and the low-pressure flash tank 8 to generate steam (flash steam). Therefore, the steam can be extracted until the temperature of the first medium is further lowered, as compared with a case where only one stage of the flash tank is provided. In addition, since the relatively low-temperature and low-pressure steam generated in the low-pressure flash tank 8 is compressed by the low-pressure stage compressor 14, the steam compressed in this way can be used as high-temperature and high-pressure steam together with the steam generated in the high-pressure flash tank 6. Therefore, in the configuration according to the above-described embodiment, a larger amount of high-temperature and high-pressure steam can be generated and used by a relatively small compressor power.

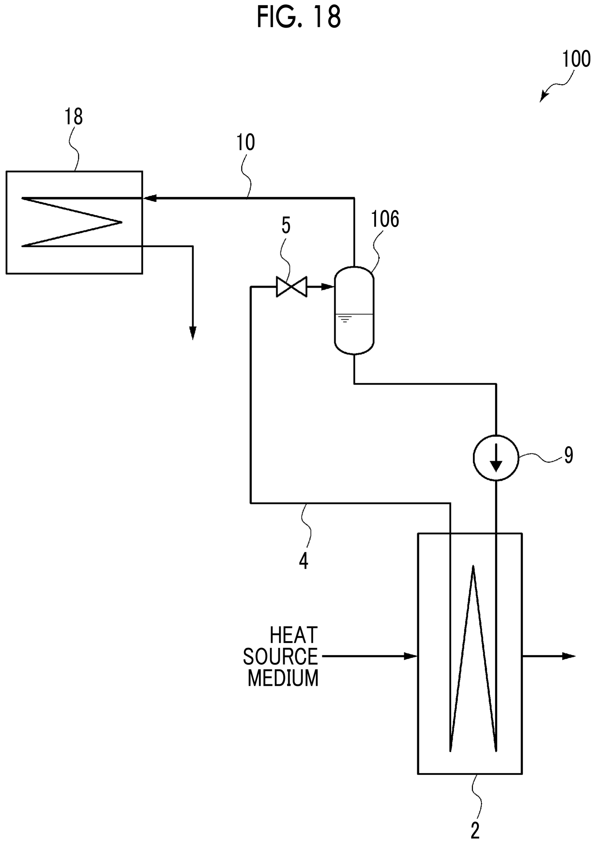

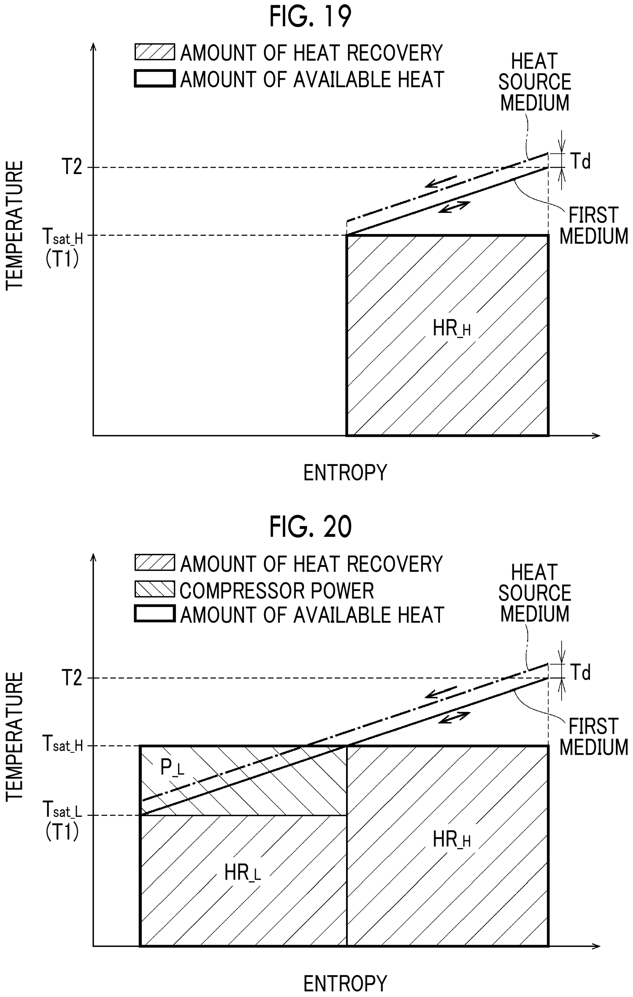

The configuration will be described with reference to the drawings. FIG. 18 is a schematic diagram of a heat recovery utilization system 100 in which only one stage of the flash tank is provided. In FIG. 18, the same elements as those of the heat recovery utilization system 1 according to the embodiment are denoted by the same reference numerals. FIG. 19 is a graph showing an example of a relationship between the temperature and the entropy of the first heat medium and the heat source medium in the heat recovery utilization system 100 shown in FIG. 18. FIG. 20 is a graph showing an example of a relationship between the temperature and the entropy of the first heat medium and the heat source medium in the heat recovery utilization system 1 (including the high-pressure flash tank 6 and the low-pressure flash tank 8) shown in FIG. 1.

In the examples shown in FIGS. 19 and 20, in the first heat exchanger 2, both the heat source medium (exhaust gas or the like) and the first medium (water or the like) are assumed to exchange heat without undergoing a phase change. In addition, the temperatures at the inlet and the outlet of the first heat exchanger 2 of the first medium are T1 and T2, respectively, and the temperature difference between the heat source medium and the first medium at each position of the first heat exchanger 2 is Td (for example, 10°C). In this case, the temperatures at the inlet and the outlet of the first heat exchanger 2 of the heat source medium are (T2 + Td) and (T1 + Td), respectively. In FIGS. 19 and 20, the temperature at the inlet of the first heat exchanger 2 of the heat source medium is common at (T2 + Td).

In the heat recovery utilization system 100 shown in FIG. 18, as shown in the graph of FIG. 19, the first medium heated to T2 by the first heat exchanger 2 is guided to a flash tank 106, and the steam and the liquid of the first medium at the saturation temperature T_{sat_H} (= T1) are generated in the flash tank 106. In the heat utilization facility 18, the steam of the first medium at the saturation temperature T_{sat_H} is used, and the liquid of the first medium at the saturation temperature T_{sat_H} (= T1) returns to the first heat exchanger 2. Therefore, the amount of heat HR_H that is recovered and used in the heat recovery utilization system 100 is represented by the area shown in FIG. 19. In addition, the temperature at the outlet of the first heat exchanger 2 of the heat source medium is (T_{sat_H} + Td).

On the other hand, in the heat recovery utilization system 1 according to one embodiment shown in FIG. 1, as shown in the graph of FIG. 20, the first medium heated to T2 by the first heat exchanger 2 is guided to the high-pressure flash tank 6, and the steam and the liquid of the first medium at the saturation temperature T_{sat_H} are generated in the high-pressure flash tank 6. Here, T_{sat_H} in FIG. 20 is equal to T1 in FIG. 19. The amount of heat HR_H that is recovered and used via the generation of flash steam in the high-pressure flash tank 6 is represented by the area shown in FIG. 20, which is equal to the area of the amount of heat HR_H in FIG. 19. In addition, the liquid of the first medium having the saturation temperature T_{sat_H} generated in the high-pressure flash tank 6 is guided to the low-pressure flash tank 8, and the steam and the liquid of the first medium having a lower saturation temperature T_{sat_L} (= T1) are further generated in the low-pressure flash tank 8. The amount of heat HR_L that is recovered and used via the generation of flash steam in the low-pressure flash tank 8 is represented by the area shown in FIG. 20. T_{sat_L} (= T1) in FIG. 20 is lower than T1 in FIG. 19. In addition, the compressor power required to raise the saturation temperature to T_{sat_H} by pressurizing the steam of the first medium at the saturation temperature T_{sat_L} (= T1) by the low-pressure stage compressor 14 is P_L. In this case, the amount of heat that can be used in the heat recovery utilization system 1 is the sum of HR_H, HR_L, and P_L. This area is larger than the amount of heat (amount of heat HR_H in FIG. 19) that can be used in the heat recovery utilization system 100 of FIG. 18. In addition, the temperature at the outlet of the first heat exchanger 2 of the heat source medium is (T_{sat_L} + Td), and as compared with a case of FIG. 18, the heat of the heat source medium can be recovered until the temperature of the heat source medium is further lowered. By adding the relatively small compressor power P_L, not only the P_L but also the heat HR_L of the heat source medium discarded in the heat recovery utilization system 100 of FIG. 18 can be effectively utilized as the heat of the temperature T_{sat_H}. Further, since the first medium that is a liquid, of which the temperature is lowered in the low-pressure flash tank 8 is fed to the first heat exchanger 2, it is possible to recover the heat of the heat source medium to a low temperature in the first heat exchanger 2.

In this way, in the configuration according to the above-described embodiment, a larger amount of high-temperature and high-pressure steam can be generated and used by a relatively small compressor power. That is, according to the above-described embodiment, it is possible to use a larger amount of high-temperature and high-pressure steam while heat is efficiently recovered.

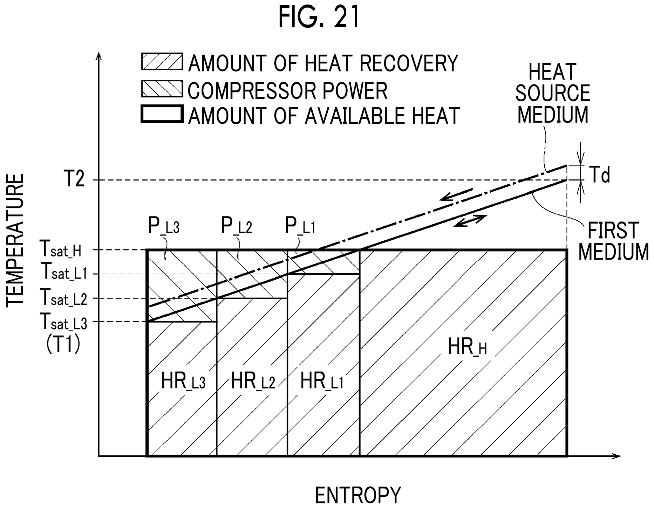

In addition, FIG. 21 is a graph showing an example of a relationship between the temperature and the entropy of the first heat medium and the heat source medium in the heat recovery utilization system 1 (including the high-pressure flash tank 6 and a plurality of (here, three) low-pressure flash tanks 8_1 to 8_3) shown in FIG. 6.

In the heat recovery utilization system 1 shown in FIG. 6, as shown in the graph of FIG. 21, the first medium heated to T2 by the first heat exchanger 2 is guided to the high-pressure flash tank 6, and the steam and the liquid of the first medium at the saturation temperature T_{sat_H} are generated in the high-pressure flash tank 6. The amount of heat HR_H that is recovered and used via the generation of flash steam in the high-pressure flash tank 6 is represented by the area shown in FIG. 21, which is equal to the area of the amount of heat HR_H in FIGS. 19 and 20. In addition, the liquid of the first medium having the saturation temperature T_{sat_H} generated in the high-pressure flash tank 6 is sequentially guided to the low-pressure flash tanks 8_1 to 8_3, and the steam and the liquid of the first medium having the further lower saturation temperatures T_{sat_L1}, T_{sat_L2}, and T_{sat_L3} (= T1) are generated in the low-pressure flash tanks 8_1 to 8_3. The amount of heat HR_L1, the amount of heat HR_L2, and the amount of heat HR_L3 that are recovered and utilized via the generation of flash steam in the low-pressure flash tanks 8_1 to 8_3 are represented by areas shown in FIG. 21. In addition, the compressor power required to raise the saturation temperature to T_{sat_H} by pressurizing the steam of the first medium at the saturation temperatures T_{sat_L1}, T_{sat_L2}, and T_{sat_L3} (= T1) by the low-pressure stage compressors 14_1 to 14_3 is P_L1, P_L2, and P_L3, respectively. In this case, the amount of heat that can be used in the heat recovery utilization system 1 is the sum of HR_H, HR_L1, HR_L2, HR_L3, P_L1, P_L2, and P_L3. This area is larger than the amount of heat (amount of heat HR_H in FIG. 19) that can be used in the heat recovery utilization system 100 of FIG. 18. In addition, the sum of the areas of the compressor power P_L1, P_L2, and P_L3 in FIG. 21 is smaller than the area of the compressor power P_L in FIG. 20. Therefore, it can be seen that a large amount of heat can be recovered and utilized with a smaller compressor power by using the heat recovery utilization system 1 including the plurality of low-pressure flash tanks 8. Further, in the heat recovery utilization system 1 of FIGS. 5 and 6, the first medium that is a liquid, of which the temperature has been lowered in the low-pressure flash tank 8_n (n = 3 in FIG. 21) having a lower pressure than the heat recovery utilization system 1 of FIG. 1 is fed to the first heat exchanger 2. Therefore, the heat of the heat source medium can be recovered to a lower temperature than in the heat recovery utilization system 1 of FIG. 1 in the first heat exchanger 2. Such an effect can be obtained even in a case where a high-pressure stage compressor 20 that further pressurizes the steam generated in the high-pressure flash tank 6 is provided as shown in FIGS. 7 and 8. In addition, such an effect can be obtained in any case of a case where the low-pressure stage compressors 14_1 to 14_n and the high-pressure stage compressor 20 are provided in series (for example, FIGS. 5 and 7) and a case where the low-pressure stage compressors 14_1 to 14_n and the high-pressure stage compressor 20 are provided in parallel (for example, FIGS. 6 and 8).

In some embodiments, the first heat exchanger 2 is configured such that the first medium and the heat source medium exchange heat without undergoing a phase change.

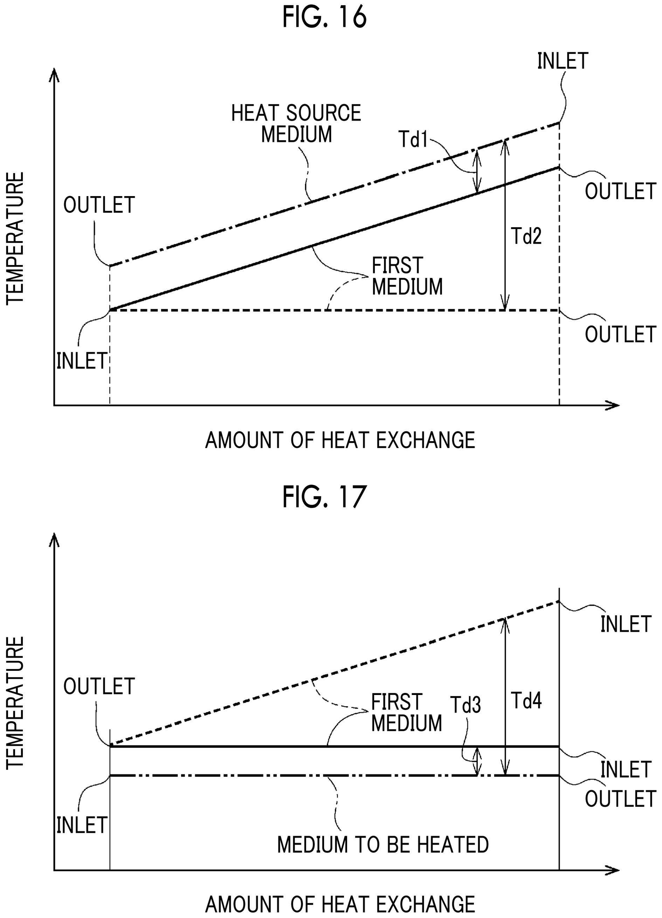

Here, FIG. 16 is a graph showing an example of the temperature and the amount of heat exchange of the heat source medium and the first medium in the first heat exchanger 2. In the graph of FIG. 16, a solid line indicates a temperature change in a case where the first medium does not undergo a phase change (that is, remains in the liquid state) in the first heat exchanger 2, and a broken line indicates a temperature change in a case where the first medium undergoes a phase change (that is, changes from a liquid to a gas) in the first heat exchanger 2. In addition, in the graph of FIG. 16, the one-dot chain line indicates a temperature change in a case where the heat source medium does not undergo a phase change in the first heat exchanger 2 (for example, in a case where the exhaust gas or the like remains in a gas state).

As shown in FIG. 16, in a case where the heat source medium and the first medium do not undergo a phase change, the temperature difference Td1 between the heat source medium and the first medium is kept small from the inlet to the outlet of the first heat exchanger 2. Therefore, the heat utilization efficiency is good, and the high-temperature heat can be effectively utilized. On the other hand, in a case where the heat source medium does not undergo a phase change but the first medium undergoes a phase change, the temperature difference Td2 between the heat source medium and the first medium increases according to the position of the first heat exchanger 2, and the heat utilization efficiency decreases.

In this regard, according to the above-described embodiment, in the first heat exchanger 2, the first medium and the heat source medium exchange heat without undergoing a phase change. Therefore, as compared with a case where any one of the first medium or the heat source medium exchanges heat without undergoing a phase change while the other of the first medium or the heat source medium undergoes a phase change, a temperature difference between the heat source medium and the first medium can be reduced. Therefore, it is possible to improve the heat utilization efficiency of the heat source medium.

In some embodiments, the heat utilization facility 18 is configured to perform heat exchange between the medium to be heated and the first medium while the medium to be heated and the first medium undergo a phase change.

Here, FIG. 17 is a graph showing an example of the temperature and the amount of heat exchange of the medium to be heated and the first medium in the heat utilization facility 18. In the graph of FIG. 17, a solid line indicates a temperature change in a case where the first medium undergoes a phase change (that is, in a case where steam is condensed) in the heat utilization facility 18, and a broken line indicates a temperature change in a case where the first medium does not undergo a phase change (that is, in a case where the first medium is steam) in the heat utilization facility 18. In addition, in the graph of FIG. 17, the dashed double-dotted line indicates a temperature change in a case where the medium to be heated undergoes a phase change (for example, in a case where a liquid evaporates) in the heat utilization facility 18.

As shown in FIG. 17, in a case where the phase of the medium to be heated and the first medium changes, the temperature difference Td3 between the first medium and the medium to be heated is kept small from the inlet to the outlet of the heat utilization facility 18. Therefore, the heat utilization efficiency is good, and the high-temperature heat can be effectively utilized. On the other hand, in a case where the first medium does not undergo a phase change but the medium to be heated undergoes a phase change, the temperature difference Td4 between the first medium and the medium to be heated increases according to the position of the heat utilization facility 18, and the heat utilization efficiency decreases.

In this regard, according to the above-described embodiment, the medium to be heated and the first medium exchange heat while the medium to be heated and the first medium undergo a phase change in the heat utilization facility 18. Therefore, a temperature difference between the first medium and the medium to be heated can be reduced as compared with a case where one of the medium to be heated or the first medium undergoes a phase change and the other of the medium to be heated or the first medium does not undergo a phase change to exchange heat. Therefore, it is possible to improve the heat utilization efficiency of the heat source medium.

In some embodiments, the return line 16 for returning the first medium from the heat utilization facility 18 to the circulation line 4, is configured to return the first medium to the circulation line 4 at a position downstream of the high-pressure flash tank 6 and upstream of a most downstream low-pressure flash tank 8 located most downstream of the at least one low-pressure flash tank 8, or to return the first medium to the most downstream low-pressure flash tank 8. Here, in a case where the heat recovery utilization system 1 has one low-pressure flash tank 8, the one low-pressure flash tank 8 is the most downstream low-pressure flash tank. In a case where the heat recovery utilization system 1 includes the plurality of low-pressure flash tanks 8_1 to 8_n, the low-pressure flash tank 8_n located most downstream of the plurality of low-pressure flash tanks 8_1 to 8_n is the most downstream low-pressure flash tank.

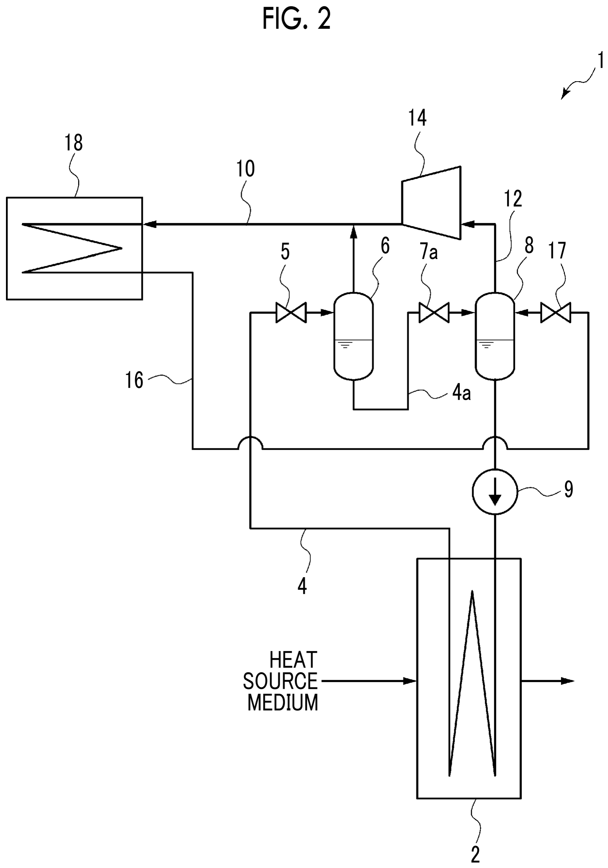

In the exemplary embodiments shown in FIGS. 1, 5, 6, and 9 to 15, the return line 16 is configured to return the first medium to the connection line 4a provided at a position downstream of the high-pressure flash tank 6 and upstream of the most downstream low-pressure flash tank 8 (or 8_n), in the circulation line 4. In the exemplary embodiment shown in FIG. 2, the return line 16 is configured to return the first medium to the most downstream low-pressure flash tank 8.

In the above-described embodiment, the first medium used as a heat source in the heat utilization facility 18 is returned to the circulation line 4, the first medium is flashed again in the low-pressure flash tank 8 to generate steam (flash steam), and the steam is supplied to the heat utilization facility 18 after being pressurized by the low-pressure stage compressor 14. That is, according to the above-described embodiment, the heat remaining in the first medium is further utilized by guiding the relatively high-temperature and high-pressure first medium after being used as a heat source in the heat utilization facility 18 to the low-pressure flash tank 8. Accordingly, since the temperature of the first medium at the inlet of the first heat exchanger 2 is lowered as compared with a case where the first medium at the outlet of the heat utilization facility 18 is directly fed to the first heat exchanger 2, the heat of the heat source medium can be recovered until the heat source medium reaches a lower temperature. Therefore, according to the above-described embodiment, it is possible to use a larger amount of high-temperature and high-pressure steam while heat is more efficiently recovered.

In some embodiments, in a case where the temperature of the first medium from the heat utilization facility 18 is T_{TUD}, the first medium from the heat utilization facility 18 may be returned to the circulation line 4 via the return line 16 at a portion (connection line 4a or 4b) of the circulation line 4 between a flash tank in which the saturation temperature in the pressure in the flash tank (high-pressure flash tank 6 or low-pressure flash tank 8) is higher than the above-described temperature T_{TUD} and a flash tank in which the saturation temperature is equal to or lower than the above-described temperature T_{TUD}.

For example, in a case where the heat recovery utilization system 1 includes a plurality of low-pressure flash tanks 8, in a case where a saturation temperature at the pressure within the high-pressure flash tank 6 is T_{sat_H} and saturation temperatures at the pressures in the plurality of low-pressure flash tanks 8_1 to 8_n are T_{sat_L1} to T_{sat_Ln}, respectively, it is assumed that T_{sae_H} > T_{TUD} ≧ T_{sat_L1}. In this case, in a case where the return line 16 is configured to return the first medium from the heat utilization facility 18 to a portion (connection line 4a) of the circulation line 4 between the high-pressure flash tank 6 and the first low-pressure flash tank 8_1 provided most upstream of the circulation line 4, among one or a plurality of low-pressure flash tanks 8, the first medium from the heat utilization facility 18 having a temperature equal to or higher than T_{sat_L1} can be effectively used to generate steam having the highest pressure and saturation temperature among the steam generated in the low-pressure flash tank 8, and a larger amount of high-temperature and high-pressure steam can be used while heat is more efficiently recovered, which is preferable (refer to FIGS. 5 and 6).

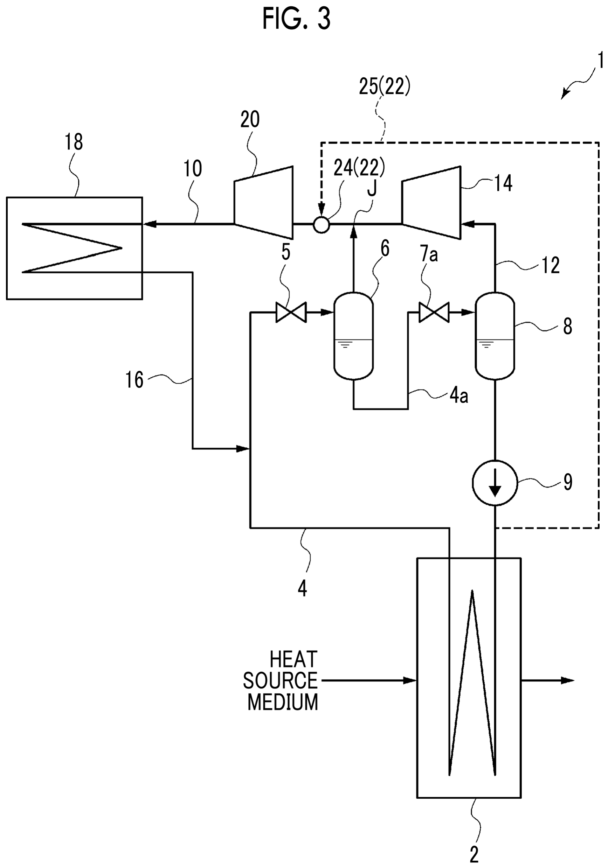

In some embodiments, for example, as shown in FIGS. 3, 4, 7, and 8, the heat recovery utilization system 1 includes the high-pressure stage compressor 20 that is provided in the steam supply line 10 and that is for pressurizing the steam of the first medium from the high-pressure flash tank 6. As shown in FIGS. 3, 4, and 7, the high-pressure stage compressor 20 may be configured to pressurize the steam of the first medium from the high-pressure flash tank 6 together with the steam of the first medium that has merged into the steam supply line 10 from the merging line 12. Alternatively, as shown in FIG. 8, the high-pressure stage compressor 20 may be configured to pressurize the steam of the first medium from the high-pressure flash tank 6 separately from the steam of the first medium that merges from the merging line 12 to the steam supply line 10.

According to the above-described embodiment, the flash steam of the relatively high-temperature and high-pressure first medium generated in the high-pressure flash tank 6 is pressurized by the high-pressure stage compressor 20. In this manner, steam having a further higher temperature and pressure (for example, steam having a higher temperature than the temperature of the heat source medium in the first heat exchanger 2) can be used in the heat utilization facility 18.

As shown in FIGS. 3, 4, 7, and 8, in a case where the high-pressure stage compressor 20 for pressurizing the steam of the first medium from the high-pressure flash tank 6 is provided, the heat utilization facility 18 may be configured to utilize the heat in the heat utilization facility 18 such that the temperature T_{TUD} of the first medium from the heat utilization facility 18 is higher than the saturation temperature T_{sat_H} at the pressure within the high-pressure flash tank 6, and the first medium after the heat utilization in the heat utilization facility 18 may return to the circulation line 4 via the return line 16 that connects a portion downstream of the first heat exchanger 2 of the circulation line 4 and upstream of the high-pressure flash tank 6 to the heat utilization facility 18. According to the present configuration, the first medium from the heat utilization facility 18 having a high temperature can be effectively used, and the high-pressure flash tank 6 can generate steam having a pressure and a saturation temperature higher than those of the low-pressure flash tank 8. As a result, a larger amount of high-temperature and high-pressure steam can be used while heat is more efficiently recovered, which is preferable.

In some embodiments, as shown in FIGS. 3, 4, and 7, the heat recovery utilization system 1 includes a cooling unit 22 that is provided between the low-pressure stage compressor 14 and the high-pressure stage compressor 20 and that cools the steam of the first medium pressurized by the low-pressure stage compressor 14. In a case where the heat recovery utilization system 1 includes a plurality of low-pressure stage compressors 14, the cooling unit 22 is provided between the low-pressure stage compressor 14 corresponding to the most upstream low-pressure flash tank 8 and the high-pressure stage compressor 20.

In the above-described embodiment, the steam of the first medium compressed by the low-pressure stage compressor 14 is introduced into the high-pressure stage compressor 20 after being cooled by the cooling unit 22. Therefore, the compressor power of the high-pressure stage compressor 20 can be reduced. Therefore, it is possible to use a larger amount of high-temperature and high-pressure steam while heat is efficiently recovered. Further, since the superheating degree and the temperature of the steam of the first medium at the outlet of the high-pressure stage compressor 20 can be reduced, it is possible to use an inexpensive material, an inexpensive seal, and an inexpensive bearing for the high-pressure stage compressor 20. On the other hand, the first medium is cooled in the cooling unit 22 in a superheated state, and the saturation temperature does not significantly change. Therefore, in a case where the heat used in the heat utilization facility 18 is the condensation heat in a case where the steam of the first medium is condensed, the amount of heat that can be used in the heat utilization facility 18 is slightly reduced.

In a case where the heat recovery utilization system 1 includes the plurality of low-pressure stage compressors 14, the heat recovery utilization system 1 may include a cooling unit 28 (cooling units 28_1, ..., 28_i in FIG. 7; hereinafter collectively referred to as the cooling unit 28) that is provided between a pair of the low-pressure stage compressors 14 and that cools the steam of the first medium pressurized by the low-pressure stage compressor 14 corresponding to the downstream (low-pressure side) low-pressure flash tank 8 of the pair of the low-pressure stage compressors 14.

In the above-described embodiment, the steam of the first medium compressed by the low-pressure stage compressor 14 corresponding to the downstream low-pressure flash tank 8 is introduced into the low-pressure stage compressor 14 corresponding to the upstream low-pressure flash tank 8 after being cooled by the cooling unit 28. Therefore, the compressor power of the low-pressure stage compressor 14 corresponding to the upstream low-pressure flash tank 8 can be reduced. Therefore, it is possible to use a larger amount of high-temperature and high-pressure steam while heat is efficiently recovered.

The cooling units 22 and 28 may be configured to spray the first medium in the liquid state from the circulation line 4 to the steam of the first medium pressurized by the low-pressure stage compressor 14. In this way, by spraying the first medium in the liquid state from the circulation line 4 and vaporizing the first medium, and by depriving the steam of the first medium pressurized by the low-pressure stage compressor 14 of the heat of vaporization by the low-pressure stage compressor 14, the steam of the first medium compressed by the low-pressure stage compressor 14 can be appropriately cooled.

In the exemplary embodiment shown in FIGS. 3 and 7, the cooling unit 22 includes a cooling liquid line 25 configured to extract the first medium in the liquid state from the circulation line 4, and a spray 24 configured to spray the first medium in the liquid state from the cooling liquid line 25 toward the steam of the first medium compressed by the low-pressure stage compressor 14. The spray 24 may be provided at a position (steam supply line 10) downstream of the merging point J between the steam supply line 10 and the merging line 12 as shown in FIGS. 3 and 7, or may be provided at a position (merging line 12) upstream of the merging point J.

In the exemplary embodiment shown in FIG. 7, the cooling unit 28 includes a spray 28 configured to spray the steam of the first medium pressurized by the low-pressure stage compressor 14 corresponding to the low-pressure flash tank 8 upstream of the pair of low-pressure stage compressors 14, onto the first medium in the liquid state from the above-described cooling liquid line 25.

Alternatively, the cooling units 22 and 28 may be configured to cool the steam of the first medium pressurized by the low-pressure stage compressor 14 through heat exchange with the first medium in the liquid state from the circulation line 4. In this way, the steam of the first medium compressed by the low-pressure stage compressor 14 can be appropriately cooled by heat exchange with the first medium in the liquid state from the circulation line 4.

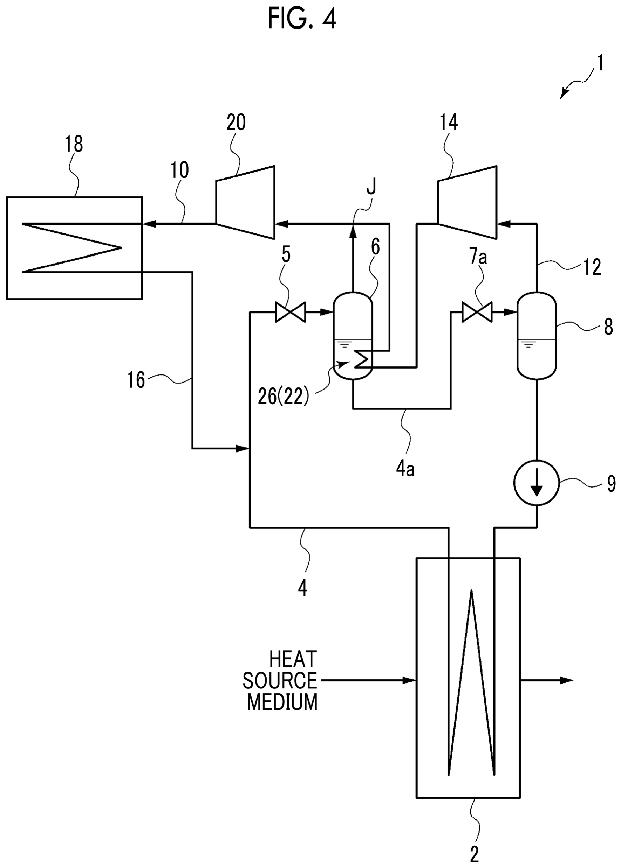

In the exemplary embodiment shown in FIG. 4, the cooling unit 22 includes a heat exchange unit 26 configured to exchange heat between the first medium in the liquid state within the high-pressure flash tank 6 and the steam of the first medium pressurized by the low-pressure stage compressor 14.

In the above-described embodiment, the steam of the first medium pressurized by the low-pressure stage compressor 14 is cooled by heat exchange with the relatively high-temperature first medium in the liquid state within the high-pressure flash tank 6. Therefore, it is possible to suppress the generation of droplets at an inlet of the high-pressure stage compressor 20 due to excessive cooling of the steam of the first medium.

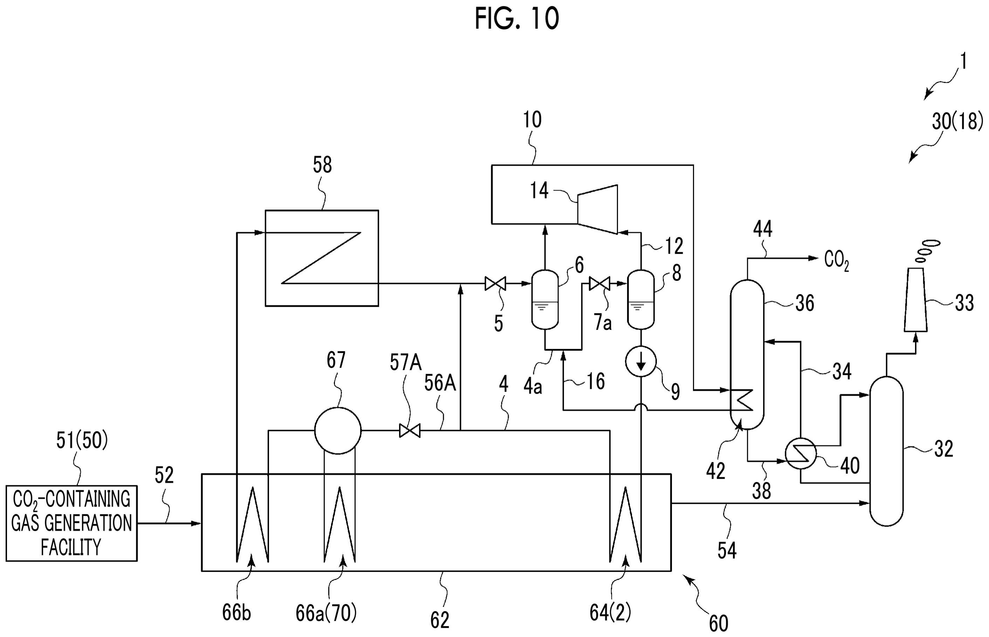

In some embodiments, for example, as shown in FIGS. 10 to 15, the heat recovery utilization system 1 includes a heat recovery steam generator (HRSG) 60 for recovering the heat of the exhaust gas from the exhaust gas generation facility 50. The heat recovery steam generator 60 includes a duct 62 to which the exhaust gas is guided, and at least one second heat exchanger provided within the duct 62 to generate steam by heating a second medium (water or the like) through heat exchange with the exhaust gas. In the shown embodiment, the at least one second heat exchanger includes the evaporator 66a, a superheater 66b, an economizer 66c, an evaporator 68a, and/or a superheater 68b. In addition, the heat recovery steam generator 60 may include a steam drum 67 and/or 69 for temporarily accommodating the steam generated by the evaporator 66a and/or 68a. The exhaust gas from the exhaust gas generation facility 50 is guided to the duct 62 via an exhaust gas introduction line 52 and is discharged from the duct 62 via a discharge line 54.

In some embodiments, the first heat exchanger 2 of the heat recovery utilization system 1 is provided downstream in the flow of the exhaust gas with respect to at least one second heat exchanger within the duct 62 of the heat recovery steam generator 60, and is configured to heat the first medium through heat exchange with the exhaust gas from the exhaust gas generation facility 50 as a heat source medium. That is, in some embodiments, the first heat exchanger 2 may be one of a plurality of heat exchangers constituting the heat recovery steam generator 60. In the exemplary embodiments shown in FIGS. 10 to 15, the first heat exchanger 2 functions as an economizer 64 for heating the second medium before being supplied to the plurality of second heat exchangers.

In the above-described embodiment, in the heat recovery steam generator 60, in addition to generating the steam of the second medium by the heat exchange in the second heat exchanger (evaporator 66a, superheater 66b, economizer 66c, evaporator 68a, and/or superheater 68b) using the heat of the exhaust gas from the exhaust gas generation facility 50, the first medium heated by the heat exchange with the exhaust gas whose temperature has been lowered after passing through the second heat exchanger can be guided to the high-pressure flash tank 6 and the low-pressure flash tank 8 to generate the steam (flash steam). Therefore, according to the above-described embodiment, it is possible to use a larger amount of high-temperature and high-pressure steam while heat is efficiently recovered.

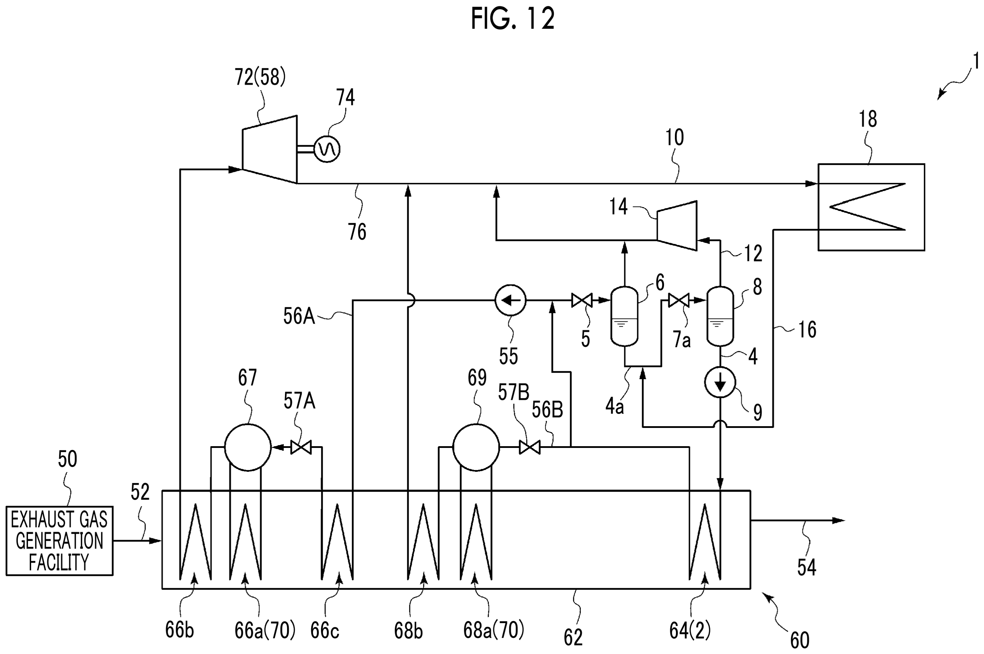

In some embodiments, for example, as shown in FIGS. 10 to 15, the heat recovery utilization system 1 includes a branch line 56A and/or 56B that branches from a portion of the circulation line 4 that is downstream of the first heat exchanger 2 (economizer 64 in the heat recovery steam generator 60) and upstream of the high-pressure flash tank 6, and that guides a part of the first medium flowing through the portion to any of the above-described second heat exchangers as the second medium. The heat recovery utilization system 1 shown in FIGS. 10 to 15 includes the branch line 56A, and the branch line 56A is configured to guide the second medium to the evaporator 66a, the superheater 66b, and/or the economizer 66c which are the second heat exchangers. The heat recovery utilization system 1 shown in FIGS. 12 to 15 further includes a branch line 56B, and the branch line 56B is configured to guide the second medium to the evaporator 68a and/or the superheater 66b which are the second heat exchangers.

In addition, normally, the first medium and the second medium are substances of the same type, and are typically water. As shown in the drawing, the branch lines 56A and 56B may be provided with valves 57A and 57B for adjusting the amount of the second medium supplied to the evaporators 66a and 68a.

According to the above-described embodiment, a part of the first medium heated by heat exchange with the exhaust gas in the first heat exchanger 2 can be guided to the second heat exchanger of the heat recovery steam generator 60 as the second medium via the branch line 56. That is, the first medium guided to the high-pressure flash tank 6 and the low-pressure flash tank 8 and the second medium guided to the second heat exchanger can be heated by heat exchange with the relatively low temperature exhaust gas in the first heat exchanger 2. Therefore, according to the above-described embodiment, it is possible to use a larger amount of high-temperature and high-pressure steam while heat is efficiently recovered.

In some embodiments, for example, as shown in FIGS. 12 to 15, the at least one second heat exchanger includes a plurality of evaporators 66a and 68a for generating steam having different pressures. Then, the branch line 56B is configured to guide a part of the first medium flowing through a portion of the circulation line 4 that is downstream of the first heat exchanger 2 (economizer 64 in the heat recovery steam generator 60) and upstream of the high-pressure flash tank 6 to the evaporator 68a provided most downstream in the flow of the exhaust gas within the duct 62 among the plurality of evaporators 66a and 68a.

According to the above-described embodiment, a part of the first medium heated by heat exchange with the exhaust gas in the first heat exchanger 2 can be guided to the evaporator 68a disposed most downstream within the duct 62 via the branch line 56B as the second medium. That is, the first medium guided to the high-pressure flash tank 6 and the low-pressure flash tank 8 and the second medium guided to the above-described evaporator 68a can be heated by heat exchange with the relatively low temperature exhaust gas in the first heat exchanger 2. Therefore, according to the above-described embodiment, it is possible to use a larger amount of high-temperature and high-pressure steam while heat is efficiently recovered.

As shown in FIGS. 10 to 15, for example, the heat recovery utilization system 1 according to some embodiments includes a steam utilization facility 58 configured to use the steam of the second medium generated by the heat recovery steam generator 60.

In some embodiments, the steam utilization facility 58 may be configured to heat the medium to be heated through heat exchange with the steam of the second medium. As shown in FIG. 10, drain water from the steam utilization facility 58 may be supplied to the high-pressure flash tank 6 via the circulation line 4.

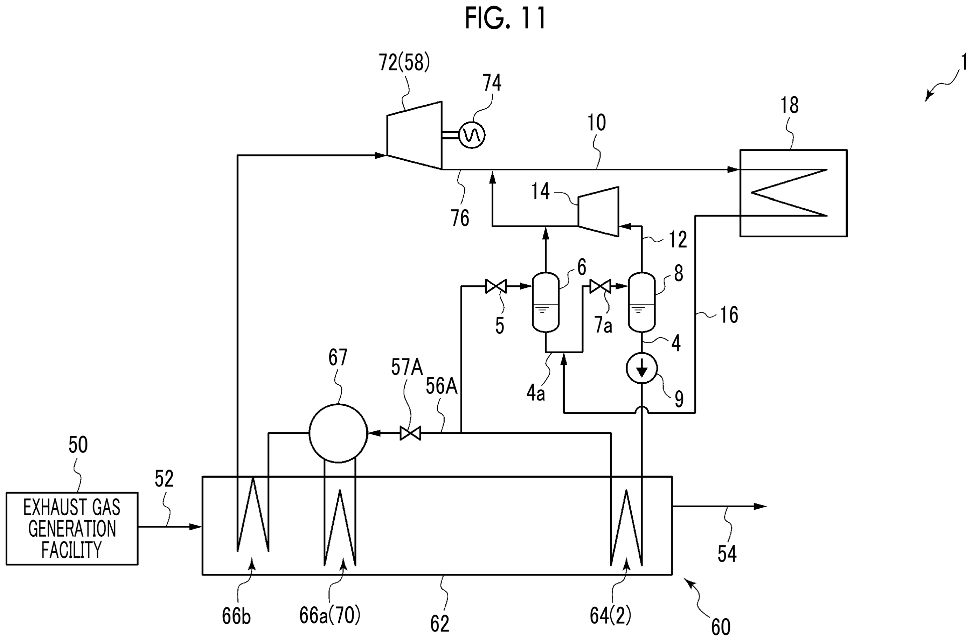

In some embodiments, for example, as shown in FIGS. 11 to 15, the steam utilization facility 58 may include a steam turbine 72 configured to be driven by the steam of the second medium generated by the heat recovery steam generator 60. The steam turbine 72 may be configured to drive a generator 74. The steam of the second medium that has worked in the steam turbine 72 is discharged from the steam turbine 72 via a turbine outlet line 76.

According to the above-described embodiment, in the heat recovery steam generator 60, in addition to generating steam (steam of the second medium) for driving the steam turbine 72 by exchanging heat in the second heat exchanger using the heat of the exhaust gas from the exhaust gas generation facility 50, the first medium heated by heat exchange with the exhaust gas whose temperature has been lowered after passing through the second heat exchanger can be guided to the high-pressure flash tank 6 and the low-pressure flash tank 8 to generate steam (flash steam). Therefore, according to the above-described embodiment, it is possible to use a larger amount of high-temperature and high-pressure steam while heat is efficiently recovered.

In some embodiments, for example, as shown in FIGS. 11, 12, 14, and 15, the turbine outlet line 76 is connected to the steam supply line 10. Then, the steam of the second medium flowing through the turbine outlet line 76 merges with the steam of the first medium of the steam supply line 10, and is supplied to the heat utilization facility 18 together with the steam of the first medium.

According to the above-described embodiment, in addition to the steam (flash steam) generated in the high-pressure flash tank 6 and the low-pressure flash tank 8, the steam discharged from the steam turbine 72 is also supplied to the heat utilization facility 18 via the steam supply line 10. Therefore, it is possible to use a larger amount of high-temperature and high-pressure steam while heat is efficiently recovered.

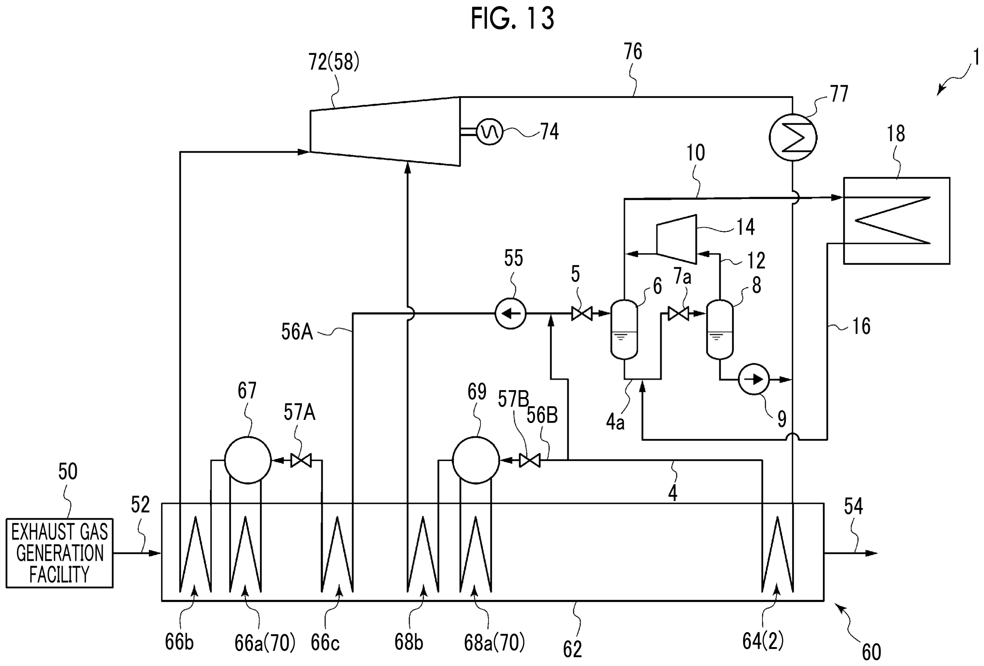

In a case where the plurality of evaporators 66a and 68a are included as shown in FIGS. 12 to 15, the steam from the evaporator 66a in which the steam of a higher pressure is generated may be supplied to the inlet of the steam turbine 72. In addition, for example, the steam from the evaporator 68a that generates the steam at a lower pressure may be guided to the turbine outlet line 76 and merged with the steam discharged from the steam turbine 72, as shown in FIGS. 12, 14, and 15, or for example, may be supplied to an intermediate stage of the steam turbine 72, as shown in FIG. 13.

In some embodiments, for example, as shown in FIG. 13, the steam discharged from the steam turbine 72 may be guided to a condenser 77 via the turbine outlet line 76. The second medium in the liquid state condensed by the condenser 77 may be returned to the heat recovery steam generator 60.

In some embodiments, for example, as shown in FIGS. 9, 10, 14, and 15, the heat utilization facility 18 includes the carbon dioxide recovery facility 30. The carbon dioxide recovery facility 30 includes an absorption unit 32 (absorber) for absorbing carbon dioxide in a gas using an absorption liquid containing an absorber, and a regeneration unit 36 (regenerator) for heating and regenerating the absorption liquid that has absorbed the carbon dioxide. The absorption unit 32 is configured to be supplied with the gas of the heat source medium discharged from the first heat exchanger 2.

The absorption unit 32 is configured to bring the gas discharged from the first heat exchanger 2 and the absorption liquid into contact with each other to absorb the carbon dioxide in the gas into the absorption liquid. The absorption liquid (rich liquid having a relatively high carbon dioxide content) that has absorbed the carbon dioxide is stored in the bottom portion of the absorption unit 32 and is guided to the regeneration unit 36 via a rich liquid line 34. The gas that has come into contact with the absorption liquid may be discharged to the outside via a stack 33.

The regeneration unit 36 heats the absorption liquid (rich liquid) from the absorption unit 32 to release the carbon dioxide from the absorption liquid. The carbon dioxide gas released from the absorption liquid is taken out from the regeneration unit 36 via the CO₂ gas line 44, and is used as a raw material for enhanced oil recovery (EOR), various chemicals, or synthetic fuel, or is stored and fixed for the purpose of suppressing global warming.

On the other hand, the absorption liquid (lean liquid having a relatively low carbon dioxide content) regenerated by the regeneration unit 36 is stored in the bottom portion of the regeneration unit 36 and is returned to the absorption unit 32 via a lean liquid line 38. The rich liquid flowing through the rich liquid line 34 may be heated by the lean liquid flowing through the lean liquid line 38 in a heat exchanger 40.

In some embodiments, the regeneration unit 36 may be configured to heat the absorption liquid by using the steam of the first medium generated in the high-pressure flash tank 6 and the low-pressure flash tank 8. For example, as shown in FIGS. 9, 10, 14, and 15, the regeneration unit 36 may include a reboiler 42 configured to heat the absorption liquid through heat exchange with the steam of the first medium. That is, the medium to be heated in the heat utilization facility 18 (carbon dioxide recovery facility 30) of the heat recovery utilization system 1 according to this embodiment is the absorption liquid.

According to the above-described embodiment, the steam of the high-temperature and high-pressure first medium, which is generated by the relatively small compressor power, can be used for regenerating the absorption liquid in the carbon dioxide recovery facility 30.

The type of carbon dioxide absorber contained in the absorption liquid is not particularly limited. For example, an alkanolamine represented by monoethanolamine and diethanolamine, or various alkaline aqueous solutions other than amines such as sodium hydroxide, potassium hydroxide, and calcium hydroxide can be used.

In some embodiments, the carbon dioxide recovery facility 30 is configured to recover the carbon dioxide contained in the heat source medium after the first medium is heated by the first heat exchanger 2.

In some embodiments, for example, as shown in FIGS. 9 and 10, the heat recovery utilization system 1 includes a carbon dioxide-containing gas generation facility 51 configured to generate a carbon dioxide-containing gas. In addition, the first heat exchanger 2 is configured to heat the first medium flowing through the circulation line 4 through heat exchange with the carbon dioxide-containing gas as the heat source medium, and the carbon dioxide recovery facility 30 is configured to recover the carbon dioxide contained in the carbon dioxide-containing gas after the first medium is heated by the first heat exchanger 2.

In order to recover the carbon dioxide from the carbon dioxide-containing gas in the carbon dioxide recovery facility 30, it is necessary to cool the carbon dioxide-containing gas to a low temperature (for example, 40°C). In that case, low-temperature cooling waste heat is generated, and effective utilization is a problem. Since the cooling waste heat is at a low temperature, it is difficult to solve the present problem. On the other hand, in the carbon dioxide recovery facility 30, a large amount of heat is consumed in the reboiler 42 that heats the absorption liquid, and the supply thereof is a problem. Here, the heat required in the reboiler 42 requires a temperature (for example, 140°C) higher than the waste heat generated in a case where the carbon dioxide-containing gas is cooled, and the heat required in the reboiler 42 cannot be supplied by directly using the waste heat generated in a case where the carbon dioxide-containing gas is cooled. According to the present invention, by using a relatively small compression power, it is possible to effectively utilize the low-temperature waste heat generated in a case where cooling the carbon dioxide-containing gas to supply the heat required in the reboiler 42, and to solve the above-described problems, improve energy utilization efficiency, and recover carbon dioxide with less energy consumption.

Examples of the combination of the discharged carbon dioxide-containing gas and the carbon dioxide-containing gas generation facility 51 include a prime mover (gas turbine, gas engine, SOFC, or the like) and an exhaust gas thereof, a boiler and an exhaust gas thereof, a reforming furnace and a reforming gas, a blast furnace and a blast furnace by-product gas, a thermal treatment furnace for combusting a fuel and an exhaust gas thereof, a ceramic kiln and an exhaust gas thereof, a waste incinerator and an exhaust gas thereof, and the like. The above-described reformer may include, for example, a furnace that performs steam methane reforming (SMR), autothermal reforming (ATR), or the like.

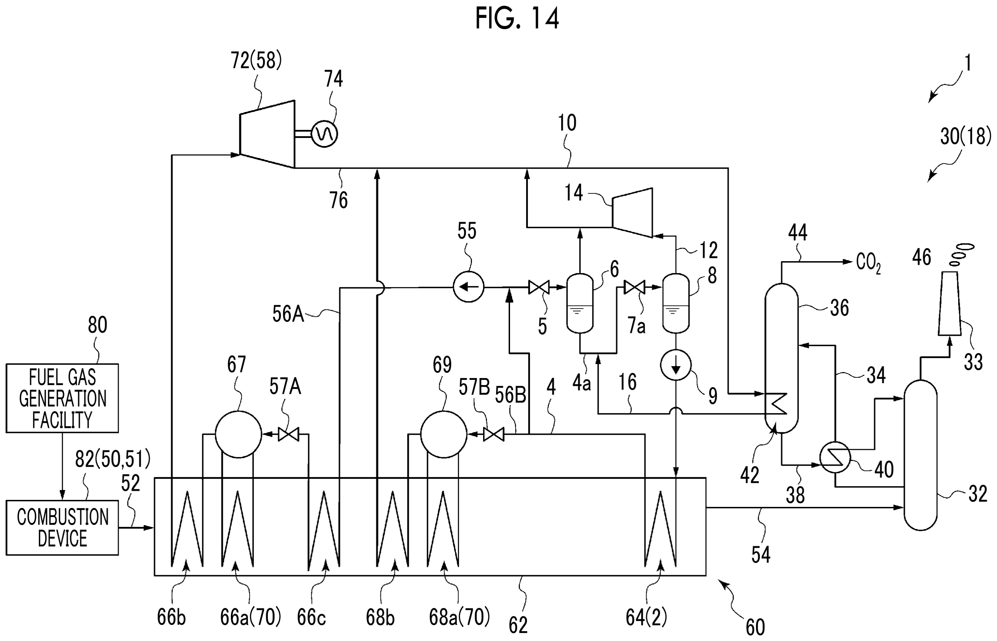

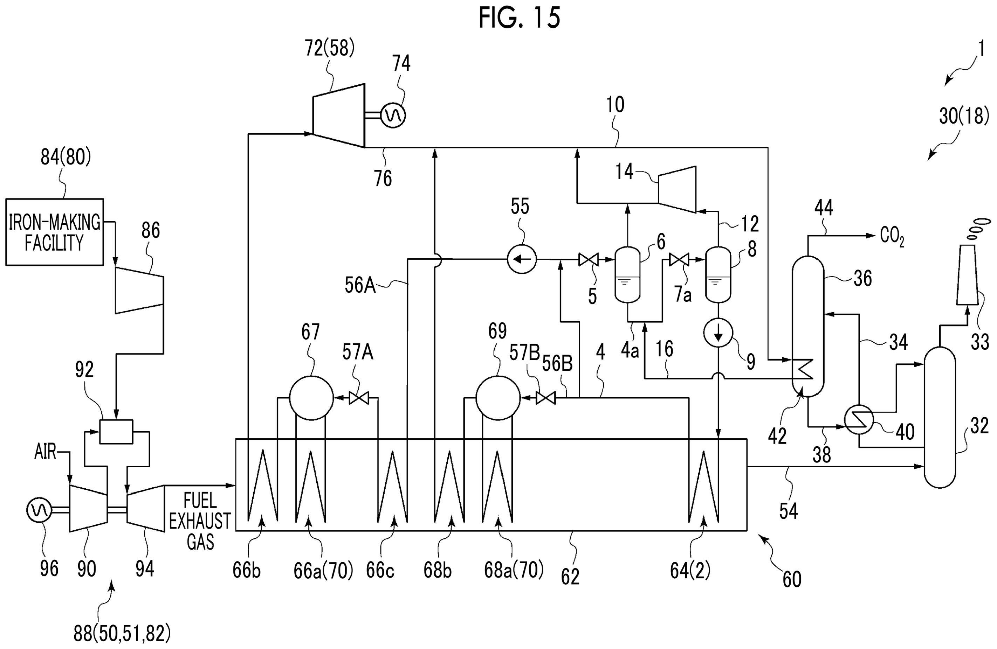

In one embodiment, for example, as shown in FIGS. 14 and 15, the carbon dioxide-containing gas generation facility 51 includes a combustion device 82 configured to generate a combustion exhaust gas containing carbon dioxide by combusting a fuel.

The combustion device 82 may include, for example, a prime mover (gas turbine, gas engine, SOFC, or the like) or each heat treatment furnace.

In the exemplary embodiment shown in FIG. 15, the combustion device 82 includes a compressor 90 for compressing air, a combustor 92 for combusting fuel together with the compressed air, and a turbine 94 configured to be driven by combustion gas generated by the combustor 92. A gas turbine 88 may be configured to drive a generator 96.

In some embodiments, for example, as shown in FIGS. 14 and 15, the heat recovery utilization system 1 includes a fuel gas generation facility 80 configured to generate a carbon-containing fuel gas, and the combustion device 82 is configured to use the carbon-containing fuel gas generated by the fuel gas generation facility 80 as a fuel.

In the exemplary embodiment shown in FIG. 15, the fuel gas generation facility 80 includes an iron-making facility 84 having a blast furnace. In a blast furnace, a gas containing carbon monoxide and carbon dioxide is generated and discharged by a reduction reaction of iron ore. The combustion device 82 (the gas turbine 88 in the example shown in FIG. 15) is configured to use a carbon-containing fuel gas (carbon monoxide or the like) discharged from the iron-making facility 84 as fuel.

According to the above-described embodiment, the carbon-containing fuel gas generated by the fuel gas generation facility 80 (for example, the iron-making facility 84) can be used as the fuel in the combustion device 82 (for example, the gas turbine 88), and the carbon dioxide contained in the combustion exhaust gas (the heat source medium) from the combustion device 82 can be recovered in the carbon dioxide recovery facility 30, and the steam of the first medium generated by using the heat recovered from the combustion exhaust gas (the heat source medium) can be used to regenerate the absorber in the carbon dioxide recovery facility 30.

For example, contents described in each of the above-described embodiments are understood as follows.

[1] A heat recovery utilization system (1) according to at least one embodiment of the present invention includes:
   a circulation line (4) through which a first medium circulates;
   a first heat exchanger (2) for heating the first medium in a liquid state flowing through the circulation line through heat exchange with a heat source medium;
   a high-pressure flash tank (6) provided in the circulation line and to which the first medium in the liquid state heated by the first heat exchanger is guided;
   at least one low-pressure flash tank (8) provided in the circulation line and to which the first medium in the liquid state is guided from the high-pressure flash tank;
   a steam supply line (10) for guiding steam of the first medium generated in the high-pressure flash tank to a heat utilization facility;
   a steam merging line (12) for merging steam of the first medium generated in the at least one low-pressure flash tank with the steam of the first medium from the high-pressure flash tank flowing through the steam supply line; and
   at least one low-pressure stage compressor (14) for pressurizing the steam of the first medium from the at least one low-pressure flash tank, the at least one low-pressure stage compressor being provided in the steam merging line.

According to a configuration of the above-described [1], the first medium heated by heat exchange with the heat source medium in the first heat exchanger is sequentially flashed in the high-pressure flash tank and the low-pressure flash tank to generate steam (flash steam). Therefore, the steam can be extracted until the temperature of the first medium is further lowered as compared with a case where only one stage of the flash tank is provided. In addition, since relatively low-temperature and low-pressure steam generated in the low-pressure flash tank is compressed by the compressor, the steam compressed in this way can be used as high-temperature and high-pressure steam together with the steam generated in the high-pressure flash tank. Therefore, in the configuration of the above-described [1], a larger amount of high-temperature and high-pressure steam can be generated and used by a relatively small compressor power. That is, according to the configuration of the above-described [1], it is possible to use a larger amount of high-temperature and high-pressure steam while heat is efficiently recovered.

[2] In some embodiments, in the heat recovery utilization system in the configuration of the above-described [1],
the first heat exchanger is configured such that the first medium and the heat source medium exchange heat without undergoing a phase change.

According to a configuration of the above-described [2], since the first medium and the heat source medium exchange heat without undergoing a phase change in the first heat exchanger, a temperature difference between the heat source medium and the first medium can be reduced, as compared with a case where any one of the first medium or the heat source medium exchanges heat without undergoing a phase change while the other of the first medium or the heat source medium undergoes a phase change. Therefore, it is possible to improve the heat utilization efficiency of the heat source medium.

[3] In some embodiments, in the configuration of the above-described [1] or [2], the heat recovery utilization system further includes:
the heat utilization facility (18) configured to receive the steam of the first medium from the steam supply line and to use the steam as a heat source.

According to a configuration of the above-described [3], the steam of the first medium from the steam supply line is received by the heat utilization facility. Therefore, while heat is efficiently recovered as described in the above-described [1], a larger amount of high-temperature and high-pressure steam can be used as the heat source in the heat utilization facility.

[4] In some embodiments, in the configuration of the above-described [3],
the heat utilization facility is configured to heat a medium to be heated through heat exchange with the first medium.

According to a configuration of the above-described [4], the medium to be heated is heated by heat exchange with the first medium in the heat utilization facility. Therefore, while heat is efficiently recovered as described in the above-described [1], the medium to be heated can be heated by using a larger amount of high-temperature and high-pressure steam as the heat source in the heat utilization facility.

[5] In some embodiments, in the heat recovery utilization system in the configuration of the above-described [4],
the heat utilization facility is configured such that the medium to be heated and the first medium exchange heat while undergoing a phase change.

According to a configuration of the above-described [5], the medium to be heated and the first medium exchange heat while undergoing a phase change in the heat utilization facility. Therefore, a temperature difference between the first medium and the medium to be heated can be reduced as compared with a case where one of the medium to be heated or the first medium undergoes a phase change and the other of the medium to be heated or the first medium does not undergo a phase change to exchange heat. Therefore, it is possible to improve the heat utilization efficiency of the heat source medium.

[6] In some embodiments, in the configuration of any one of the above-described [3] to [5], the heat recovery utilization system further includes:
a return line (16) for returning the first medium used as the heat source in the heat utilization facility to the circulation line,
in which the return line is configured to return the first medium to the circulation line at a position downstream of the high-pressure flash tank and upstream of a most downstream low-pressure flash tank located most downstream of the at least one low-pressure flash tank, or to return the first medium to the most downstream low-pressure flash tank.

In a configuration of the above-described [6], the first medium used as the heat source in the heat utilization facility is returned to the circulation line, the first medium is flashed again in the low-pressure flash tank to generate steam (flash steam), and the steam is pressurized by the low-pressure stage compressor and supplied to the heat utilization facility. That is, according to the configuration of the above-described [6], the heat remaining in the first medium is further utilized by guiding the relatively high-temperature and high-pressure first medium to the low-pressure flash tank after being used as the heat source in the heat utilization facility. Accordingly, since the temperature of the first medium at an inlet of the first heat exchanger is lowered as compared with a case where the first medium at an outlet of the heat utilization facility is directly fed to the first heat exchanger, the heat of the heat source medium can be recovered until the heat source medium reaches a lower temperature. Therefore, according to the configuration of the above-described [6], it is possible to use a larger amount of high-temperature and high-pressure steam while heat is more efficiently recovered.

[7] In some embodiments, in the configuration of any one of the above-described [1] to [6], the heat recovery utilization system further includes:
a high-pressure stage compressor (20) for pressurizing the steam of the first medium from the high-pressure flash tank, the high-pressure stage compressor (20) being provided in the steam supply line.

According to a configuration of the above-described [7], the flash steam of the relatively high-temperature and high-pressure first medium generated in the high-pressure flash tank is pressurized by the high-pressure stage compressor. In this manner, steam having a further higher temperature and a higher pressure (for example, steam having a higher temperature than the temperature of the heat source medium in the first heat exchanger) can be used in the heat utilization facility.

[8] In some embodiments, in the configuration of the above-described [7], the heat recovery utilization system further includes:
a cooling unit (22) for cooling the steam of the first medium pressurized by the at least one low-pressure stage compressor, the cooling unit (22) being provided between the at least one low-pressure stage compressor and the high-pressure stage compressor.

According to a configuration of the above-described [8], the steam of the first medium compressed by the low-pressure stage compressor is introduced into the high-pressure stage compressor after being cooled by the cooling unit. Therefore, the compressor power of the high-pressure stage compressor can be reduced. Therefore, it is possible to use a larger amount of high-temperature and high-pressure steam while heat is efficiently recovered.

[9] In some embodiments, in the configuration of the above-described [8],
the cooling unit is configured to spray the first medium in the liquid state from the circulation line into the steam of the first medium.

According to a configuration of the above-described [9], the steam of the first medium compressed by the low-pressure stage compressor can be appropriately cooled by spraying the first medium in the liquid state from the circulation line.

[10] In some embodiments, in the configuration of the above-described [8],
the cooling unit is configured to cool the steam of the first medium through heat exchange with the first medium in the liquid state from the circulation line.

According to a configuration of the above-described [10], the steam of the first medium compressed by the low-pressure stage compressor can be appropriately cooled by heat exchange with the first medium in the liquid state from the circulation line.

[11] In some embodiments, in the configuration of the above-described [8],
the cooling unit is configured to cool the steam of the first medium through heat exchange with the first medium in the liquid state within the high-pressure flash tank.

According to a configuration of the above-described [11], the steam of the first medium compressed by the low-pressure stage compressor is cooled by heat exchange with the relatively-high temperature first medium in the liquid state within the high-pressure flash tank. Therefore, it is possible to suppress the generation of droplets at an inlet of the high-pressure stage compressor due to excessive cooling of the steam of the first medium.

[12] In some embodiments, in the configuration of any one of the above-described [1] to [11], the heat recovery utilization system, further includes:
a heat recovery steam generator (60) including a duct (62) to which an exhaust gas from an exhaust gas generation facility is guided, and at least one second heat exchanger (for example, the above-described evaporator 66a, superheater 66b, economizer 66c, evaporator 68a, and/or superheater 68b) for generating steam by heating a second medium through heat exchange with the exhaust gas, the at least one heat exchanger being provided within the duct,
in which the first heat exchanger is provided downstream of the at least one second heat exchanger in a flow of the exhaust gas within the duct, and is configured to heat the first medium through heat exchange with the exhaust gas as the heat source medium.

In a configuration of the above-described [12], in the heat recovery steam generator, in addition to generating steam of the second medium through heat exchange in the second heat exchanger using the heat of the exhaust gas from the exhaust gas generation facility, the first medium heated by heat exchange with the exhaust gas whose temperature has been lowered after passing through the second heat exchanger can be guided to the high-pressure flash tank and the low-pressure flash tank to generate steam (flash steam). Therefore, according to the configuration of the above-described [12], it is possible to use a larger amount of high-temperature and high-pressure steam while heat is efficiently recovered.

[13] In some embodiments, in the configuration of the above-described [12], the heat recovery utilization system further includes:
a branch line (56A, 56B) branched from a portion of the circulation line downstream of the first heat exchanger and upstream of the high-pressure flash tank and guiding a part of the first medium flowing through the portion to any one of the at least one second heat exchanger as the second medium.

According to a configuration of the above-described [13], the part of the first medium heated by heat exchange with the exhaust gas in the first heat exchanger can be guided to the second heat exchanger as the second medium via the branch line. That is, the first medium guided to the high-pressure flash tank and the low-pressure flash tank and the second medium guided to the second heat exchanger can be heated by heat exchange with the relatively low temperature exhaust gas in the first heat exchanger. Therefore, according to the configuration of the above-described [13], it is possible to use a larger amount of high-temperature and high-pressure steam while heat is efficiently recovered.

[14] In some embodiments, in the configuration of the above-described [13],
the at least one second heat exchanger includes a plurality of evaporators (66a, 68a) for generating steam having different pressures from each other, and
the branch line is configured to guide the part of the first medium flowing through the portion of the circulation line to an evaporator (68a) provided most downstream in the flow of the exhaust gas within the duct among the plurality of evaporators.

According to a configuration of the above-described [14], the part of the first medium heated by heat exchange with the exhaust gas in the first heat exchanger can be guided to the evaporator disposed most downstream within the duct as the second medium via the branch line. That is, the first medium guided to the high-pressure flash tank and the low-pressure flash tank and the second medium guided to the above-described evaporator can be heated by heat exchange with the relatively low temperature exhaust gas in the first heat exchanger. Therefore, according to the configuration of the above-described [14], it is possible to use a larger amount of high-temperature and high-pressure steam while heat is efficiently recovered.

[15] In some embodiments, in the configuration of any one of the above-described [12] to [14], the heat recovery utilization system further includes:
a steam turbine (72) configured to be driven by steam of the second medium generated by the heat recovery steam generator.

According to a configuration of the above-described [15], in the heat recovery steam generator, in addition to generating steam (steam of the second medium) for driving the steam turbine by heat exchange in the second heat exchanger using the heat of the exhaust gas from the exhaust gas generation facility, the first medium heated by heat exchange with the exhaust gas whose temperature has been lowered after passing through the second heat exchanger can be guided to the high-pressure flash tank and the low-pressure flash tank to generate steam (flash steam). Therefore, according to the configuration of the above-described [15], it is possible to use a larger amount of high-temperature and high-pressure steam while heat is efficiently recovered.

[16] In some embodiments, in the configuration of the above-described [15], the heat recovery utilization system further includes:
a turbine outlet line (76) through which the steam of the second medium is discharged from the steam turbine,
in which the turbine outlet line is connected to the steam supply line.

According to a configuration of the above-described [16], in addition to the steam (flash steam) generated in the high-pressure flash tank and the low-pressure flash tank, the steam discharged from the steam turbine is also supplied to the heat utilization facility via the steam supply line. Therefore, a larger amount of high-temperature and high-pressure steam can be used while heat is efficiently recovered.

[17] In some embodiments, in the configuration of any one of the above-described [1] to [16], the heat recovery utilization system further includes:
a carbon dioxide recovery facility (30) including an absorption unit (32) for absorbing carbon dioxide in a gas using an absorption liquid containing an absorber, and a regeneration unit (36) for heating and regenerating the absorption liquid that has absorbed the carbon dioxide,
in which the steam supply line is configured to supply the steam of the first medium to the regeneration unit as the heat utilization facility.

According to a configuration of the above-described [17], the steam of the high-temperature and high-pressure first medium, which is generated by the relatively small compressor power, can be used to regenerate the absorption liquid in the carbon dioxide recovery facility.

[18] In some embodiments, in the configuration of the above-described [17],
the heat source medium contains carbon dioxide, and
the carbon dioxide recovery facility is configured to recover the carbon dioxide contained in the heat source medium after the first medium is heated by the first heat exchanger.

According to a configuration of the above-described [18], it is possible to recover the carbon dioxide contained in the heat source medium in the carbon dioxide recovery facility and to use the steam of the first medium generated by using the heat recovered from the heat source medium to regenerate the absorber in the carbon dioxide recovery facility.

[19] In some embodiments, in the configuration of the above-described [17] or [18], the heat recovery utilization system includes:
a carbon dioxide-containing gas generation facility (51) configured to generate a carbon dioxide-containing gas,
in which the first heat exchanger is configured to heat the first medium through heat exchange with the carbon dioxide-containing gas as the heat source medium, and
the carbon dioxide recovery facility is configured to recover carbon dioxide contained in the carbon dioxide-containing gas after the first medium is heated by the first heat exchanger.

According to the configuration of the above-described [19], the carbon dioxide contained in the carbon dioxide-containing gas (heat source medium) from the carbon dioxide-containing gas generation facility can be recovered in the carbon dioxide recovery facility, and the steam of the first medium generated by using the heat recovered from the carbon dioxide-containing gas (heat source medium) can be used for regenerating the absorber in the carbon dioxide recovery facility.

[20] In some embodiments, in the configuration of the above-described [19], the carbon dioxide-containing gas generation facility includes a combustion device (82) configured to generate a combustion exhaust gas containing carbon dioxide by combusting a fuel.

According to a configuration of the above-described [20], it is possible to recover the carbon dioxide contained in the combustion exhaust gas (heat source medium) from the combustion device in the carbon dioxide recovery facility and to use the steam of the first medium generated by using the heat recovered from the combustion exhaust gas (heat source medium) for regenerating the absorber in the carbon dioxide recovery facility.

[21] In some embodiments, in the configuration of the above-described [20], the heat recovery utilization system further includes:
a fuel gas generation facility (80) configured to generate a carbon-containing fuel gas,
in which the combustion device is configured to use the carbon-containing fuel gas generated by the fuel gas generation facility as the fuel.

According to a configuration of the above-described [21], the carbon-containing fuel gas generated by the fuel gas generation facility can be used as a fuel in the combustion device, and the carbon dioxide contained in the combustion exhaust gas (heat source medium) from the combustion device can be recovered in the carbon dioxide recovery facility, and the steam of the first medium generated by using the heat recovered from the combustion exhaust gas (heat source medium) can be used for regenerating the absorber in the carbon dioxide recovery facility.

[22] In some embodiments, in the configuration of the above-described [21],
the fuel gas generation facility includes an iron-making facility (84) having a blast furnace, and
the combustion device is configured to use the carbon-containing fuel gas discharged from the iron-making facility as the fuel.

According to a configuration of the above-described [22], the carbon-containing fuel gas generated in the iron-making facility can be used as a fuel in the combustion device, and the carbon dioxide contained in the combustion exhaust gas (heat source medium) from the combustion device can be recovered in the carbon dioxide recovery facility, and the steam of the first medium generated by using the heat recovered from the combustion exhaust gas (heat source medium) can be used for regenerating the absorber in the carbon dioxide recovery facility.

Although the embodiments of the present invention have been described, the present invention is not limited to the above-described embodiments, and includes modifications of the above-described embodiments and a combination of these embodiments as appropriate.

In the present specification, an expression representing a relative or absolute arrangement such as "in a certain direction", "along a certain direction", "parallel", "orthogonal", "center", "concentric", or "coaxial" does not strictly represent only such an arrangement, but also a tolerance or a state of being relatively displaced with an angle or a distance to the extent that the same function can be obtained.

For example, expressions representing that things are in an equal state such as "same", "equal", and "homogeneous" not only strictly represent an equal state, but also represent a state where a difference exists with a tolerance or to such an extent that the same function can be obtained.

Further, in the present specification, an expression representing a shape such as a quadrangular shape or a cylindrical shape does not represent only a shape such as a quadrangular shape or a cylindrical shape in a geometrically strict sense, but also a shape including an uneven portion, a chamfered portion, and the like within a range in which the same effect can be obtained.

Further, in the present specification, an expression such as "comprising", "including", or "having" one component is not an exclusive expression excluding the presence of another component.

### Reference Signs List

1: heat recovery utilization system
2: first heat exchanger
4: circulation line
4a: connection line
4b: connection line
5: pressure-reducing valve
6: high-pressure flash tank
7a: pressure-reducing valve
7b: pressure-reducing valve
8: low-pressure flash tank
9: pump
10: steam supply line
12: merging line
14: low-pressure stage compressor
16: return line
18: heat utilization facility
20: high-pressure stage compressor
22 cooling unit
24: spray
25: cooling liquid line
26: heat exchange unit
28: cooling unit
30: carbon dioxide recovery facility
32: absorption unit
33: stack
34: rich liquid line
36: regeneration unit
38: lean liquid line
40: heat exchanger
42: reboiler
44: CO₂ gas line
50: exhaust gas generation facility
51: carbon dioxide-containing gas generation facility
52: exhaust gas introduction line
54 discharge line
56: branch line
56A: branch line
56B: branch line
57A: valve
57B: valve
58: steam utilization facility
60: heat recovery steam generator
62: duct
64: economizer
66a: evaporator
66b: superheater
66c: economizer
67: steam drum
68a: evaporator
68b: superheater
72: steam turbine
74: generator
76: turbine outlet line
77: condenser
80: fuel gas generation facility
82: combustion device
84: iron-making facility
88: gas turbine
90: compressor
92: combustor
94: turbine
96: generator
100: heat recovery utilization system
106: flash tank
J: merging point

## Claims

1. A heat recovery utilization system comprising:
a circulation line through which a first medium circulates;
a first heat exchanger for heating the first medium in a liquid state flowing through the circulation line through heat exchange with a heat source medium;
a high-pressure flash tank provided in the circulation line and to which the first medium in the liquid state heated by the first heat exchanger is guided;
at least one low-pressure flash tank provided in the circulation line and to which the first medium in the liquid state is guided from the high-pressure flash tank;
a steam supply line for guiding steam of the first medium generated in the high-pressure flash tank to a heat utilization facility;
a steam merging line for merging steam of the first medium generated in the at least one low-pressure flash tank with the steam of the first medium from the high-pressure flash tank flowing through the steam supply line; and
at least one low-pressure stage compressor for pressurizing the steam of the first medium from the at least one low-pressure flash tank, the at least one low-pressure stage compressor being provided in the steam merging line.

2. The heat recovery utilization system according to Claim 1,
wherein the first heat exchanger is configured such that the first medium and the heat source medium exchange heat without undergoing a phase change.

3. The heat recovery utilization system according to Claim 1 or 2, further comprising:
the heat utilization facility configured to receive the steam of the first medium from the steam supply line and to use the steam as a heat source.

4. The heat recovery utilization system according to Claim 3,
wherein the heat utilization facility is configured to heat a medium to be heated through heat exchange with the first medium.

5. The heat recovery utilization system according to Claim 4,
wherein the heat utilization facility is configured such that the medium to be heated and the first medium exchange heat while undergoing a phase change.

6. The heat recovery utilization system according to Claim 3, further comprising:
a return line for returning the first medium used as the heat source in the heat utilization facility to the circulation line,
wherein the return line is configured to return the first medium to the circulation line at a position downstream of the high-pressure flash tank and upstream of a most downstream low-pressure flash tank located most downstream of the at least one low-pressure flash tank, or to return the first medium to the most downstream low-pressure flash tank.

7. The heat recovery utilization system according to Claim 1 or 2, further comprising:
a high-pressure stage compressor for pressurizing the steam of the first medium from the high-pressure flash tank, the high-pressure stage compressor being provided in the steam supply line.

8. The heat recovery utilization system according to Claim 7, further comprising:
a cooling unit for cooling the steam of the first medium pressurized by the at least one low-pressure stage compressor, the cooling unit being provided between the at least one low-pressure stage compressor and the high-pressure stage compressor.

9. The heat recovery utilization system according to Claim 8,
wherein the cooling unit is configured to spray the first medium in the liquid state from the circulation line into the steam of the first medium.

10. The heat recovery utilization system according to Claim 8,
wherein the cooling unit is configured to cool the steam of the first medium through heat exchange with the first medium in the liquid state from the circulation line.

11. The heat recovery utilization system according to Claim 8,
wherein the cooling unit is configured to cool the steam of the first medium through heat exchange with the first medium in the liquid state within the high-pressure flash tank.

12. The heat recovery utilization system according to Claim 1 or 2, further comprising:
a heat recovery steam generator including a duct to which an exhaust gas from an exhaust gas generation facility is guided, and at least one second heat exchanger for generating steam by heating a second medium through heat exchange with the exhaust gas, the at least one heat exchanger being provided within the duct,
wherein the first heat exchanger is provided downstream of the at least one second heat exchanger in a flow of the exhaust gas within the duct, and is configured to heat the first medium through heat exchange with the exhaust gas as the heat source medium.

13. The heat recovery utilization system according to Claim 12, further comprising:
a branch line branched from a portion of the circulation line downstream of the first heat exchanger and upstream of the high-pressure flash tank and guiding a part of the first medium flowing through the portion to any one of the at least one second heat exchanger as the second medium.

14. The heat recovery utilization system according to Claim 13,
wherein the at least one second heat exchanger includes a plurality of evaporators for generating steam having different pressures from each other, and
the branch line is configured to guide the part of the first medium flowing through the portion of the circulation line to an evaporator provided most downstream in the flow of the exhaust gas within the duct among the plurality of evaporators.

15. The heat recovery utilization system according to Claim 12, further comprising:
a steam turbine configured to be driven by steam of the second medium generated by the heat recovery steam generator.

16. The heat recovery utilization system according to Claim 15, further comprising:
a turbine outlet line through which the steam of the second medium is discharged from the steam turbine,
wherein the turbine outlet line is connected to the steam supply line.

17. The heat recovery utilization system according to Claim 1 or 2, further comprising:
a carbon dioxide recovery facility including an absorption unit for absorbing carbon dioxide in a gas using an absorption liquid containing an absorber, and a regeneration unit for heating and regenerating the absorption liquid that has absorbed the carbon dioxide,
wherein the steam supply line is configured to supply the steam of the first medium to the regeneration unit as the heat utilization facility.

18. The heat recovery utilization system according to Claim 17,
wherein the heat source medium contains carbon dioxide, and
the carbon dioxide recovery facility is configured to recover the carbon dioxide contained in the heat source medium after the first medium is heated by the first heat exchanger.

19. The heat recovery utilization system according to Claim 17, further comprising:
a carbon dioxide-containing gas generation facility configured to generate a carbon dioxide-containing gas,
wherein the first heat exchanger is configured to heat the first medium through heat exchange with the carbon dioxide-containing gas as the heat source medium, and
the carbon dioxide recovery facility is configured to recover carbon dioxide contained in the carbon dioxide-containing gas after the first medium is heated by the first heat exchanger.

20. The heat recovery utilization system according to Claim 19,
wherein the carbon dioxide-containing gas generation facility includes a combustion device configured to generate a combustion exhaust gas containing carbon dioxide by combusting a fuel.

21. The heat recovery utilization system according to Claim 20, further comprising:
a fuel gas generation facility configured to generate a carbon-containing fuel gas,
wherein the combustion device is configured to use the carbon-containing fuel gas generated by the fuel gas generation facility as the fuel.

22. The heat recovery utilization system according to Claim 21,
wherein the fuel gas generation facility includes an iron-making facility having a blast furnace, and
the combustion device is configured to use the carbon-containing fuel gas discharged from the iron-making facility as the fuel.
